# EUROPEAN PATENT APPLICATION

(11) **EP 4 625 659 A1**
(43) Date of publication of application: **01.10.2025**
(21) Application number: 22969908.7
(22) Date of filing: 31.12.2022
(51) Int. Cl.: H01M 50/249, B60L 50/60

(54) **BATTERY AND VEHICLE**

(71) Applicant: Contemporary Amperex Technology Co., Limited, Ningde, Fujian 352100 (CN)
(72) Inventor: CAO, Gen, Ningde, Fujian 352100 (CN); CHAN, Libing, Ningde, Fujian 352100 (CN); JIANG, Yuwei, Ningde, Fujian 352100 (CN); LIU, Bin, Ningde, Fujian 352100 (CN)
(74) Representative: Gong, Jinping
(86) International application number: PCT/CN2022/144394
(87) International publication number: WO 2024/138768

(57) **Abstract**

Provided are a battery and a vehicle. The battery includes a battery cell and a housing. The battery cell is accommodated in the housing. The housing includes a first housing portion and two second housing portions located at two sides of the first housing portion in a first direction. The battery cell is disposed in each of the first housing portion and the two second housing portions. A recess is defined by the first housing portion and the two second housing portions together. The recess is a through recess in the first direction and opened towards a second direction. The battery is adapted to be disposed at a bottom of a vehicle. A vehicle-bottom longitudinal beam of the vehicle is adapted to pass through the recess in the first direction and to be detachably mounted in the recess in the second direction. The first direction intersects the second direction.

## Description

### FIELD

The present disclosure relates to the field of battery technologies, and more particularly, to a battery and a vehicle.

### BACKGROUND

A battery is generally disposed at a bottom of a vehicle and located below a vehicle-bottom longitudinal beam. In order to improve endurance mileage, in a case where a width and length of a vehicle body are limited, a height of the battery can only be increased as much as possible, resulting in a small height of the battery above ground. In this way, on the one hand, when the ground has protrusions, the battery is easily bumped and damaged. On the other hand, during battery swapping operation, a groove needs to be disposed in advance in a battery swapping station, or the vehicle needs to be lifted up, resulting in a high battery swapping cost.

### SUMMARY

Embodiments of the present disclosure provide a battery and a vehicle. A height of the battery above ground can be improved.

According to a first aspect, an embodiment of the present disclosure provides a battery, including a battery cell and a housing. The battery cell is accommodated in the housing. The housing includes a first housing portion and two second housing portions located at two sides of the first housing portion in a first direction. The battery cell is disposed in each of the first housing portion and the two second housing portions. A recess is defined by the first housing portion and the two second housing portions together. The recess is a through recess in the first direction and opened towards a second direction. The battery is adapted to be disposed at a bottom of a vehicle. A vehicle-bottom longitudinal beam of the vehicle is adapted to pass through the recess in the first direction and to be detachably mounted in the recess in the second direction. The first direction intersects the second direction.

In the above technical solution, the recess is defined by the first housing portion and the second housing portion together. The recess may be a through recess in the first direction and opened towards the second direction, to be allowed to be configured to provide a space through which the vehicle-bottom longitudinal beam of the vehicle passes, which can allow the battery to be convenient to be detachably mounted at the vehicle-bottom longitudinal beam in the second direction. The recess structure may be configured such that at least part of the second housing portion may be higher than a bottom wall of the vehicle-bottom longitudinal beam to be located at a side surface of the vehicle-bottom longitudinal beam. In this way, spaces at two sides of the vehicle-bottom longitudinal beam can be utilized for providing more battery cells, to improve an energy density of the battery, or battery cells originally required to be arranged at a bottom layer of the battery can be transferred to the two sides of the vehicle-bottom longitudinal beam, which can further improve the height of the battery above the ground and ensure a sufficient space reserved between the bottom of the battery and the ground for a battery swapping operation. Moreover, because of an improvement in the height of the battery above the ground, risks of hitting and scratching the bottom of the battery due to the protrusions of the ground and the like can be reduced, and use safety and a service life of the battery are improved. Therefore, by providing the recess at a top of the housing, the problem of low space utilization rate can be effectively solved, which is beneficial to an improvement in safety and reliability of the battery and to battery swapping design.

In some embodiments, ends of the two second housing portions at one side each protrude from the first housing portion in the second direction, to define the recess by an end wall of the first housing portion perpendicular to the second direction and side walls of the two second housing portions facing towards the first housing portion. With this structure, the spaces at the two sides of the vehicle-bottom longitudinal beam can be utilized for providing more battery cells, to improve the energy density of the battery, or the battery cells originally required to be arranged at the bottom layer of the battery can be transferred to the two sides of the vehicle-bottom longitudinal beam, which can further improve the height of the battery above the ground.

In some embodiments, the end wall of the first housing portion facing towards the recess is adapted to be lower than the vehicle-bottom longitudinal beam, which can allow the vehicle-bottom longitudinal beam to pass over a top of the first housing portion. A space is reserved at the top of the first housing portion for mounting other structures of the vehicle or other structures of the battery.

In some embodiments, a docking structure is disposed in the recess and is adapted to be extended between two longitudinal beams of the vehicle-bottom longitudinal beam. The docking structure is configured to dock with the vehicle to allow for current conduction and/or liquid conduction. The docking structure is disposed in the recess. In this way, not only does the docking structure not completely protrude out of a top wall of the battery when the docking structure faces upwards to increase an overall height of the battery, thereby allowing for more abundant operable spaces reserved by the vehicle bottom during battery replacement, but the docking structure of the vehicle and the docking structure of the battery can also complete a docking action in the recess, making the connection safer.

In some embodiments, the docking structure is disposed at the end wall of the first housing portion facing towards the recess. In these embodiments, the docking structure may be disposed at the end wall of the first housing facing towards the recess, which facilitates an arrangement of the docking structure by using the space in the recess. The docking structure of a vehicle end may be correspondingly disposed, so that docking of the battery and the vehicle may be provided between the vehicle body and the battery housing without being exposed, which may enhance protection for the docking structure and improve safety.

In some embodiments, the docking structure includes a box body, a docking body, and a docking header. The box body is disposed at the end wall of the first housing portion facing towards the recess. The docking body is disposed in the box body. The docking header is disposed outside the box body. The docking header is connected to the docking body. The docking body is connected to a circuit and/or a fluid circuit in the housing. Therefore, the docking structure is simple and convenient to be processed and mounted, which can effectively prevent the docking structure from occupying a space of the housing for storing the battery cell, and improve the energy density of the battery.

In some embodiments, the docking header is adapted to dock with the vehicle in the first direction; or the docking header is adapted to dock with the vehicle in the second direction. Therefore, the space can be flexibly utilized, different docking requirements are satisfied, and an application range is wide.

The docking header may dock with the vehicle in the first direction, and the battery may move in the second direction to allow the recess to be fit with the vehicle-bottom longitudinal beam and then move in the first direction, allowing a docking header of the battery to dock with a docking header of the vehicle. In this way, more docking buffer spaces do not need to be reserved in a height direction. The docking header may also be configured to dock with the vehicle in the second direction, and the battery may move in the second direction, such that the docking header of the battery docks with the docking header of the vehicle while the recess is fit with the vehicle-bottom longitudinal beam, thereby reducing steps of replacing the battery to the vehicle end. Therefore, efficiency can be improved, and the space at the vehicle-bottom longitudinal beam can be more fully utilized, improving the energy density of the battery.

In some embodiments, the first housing portion is connected to the second housing portion through a transition portion; each of the first housing portion and the second housing portion extends beyond the transition portion in the second direction; and the recess is defined by a side wall of the first housing portion facing towards the second housing portion, an end wall of the transition portion perpendicular to the second direction, and a side wall of the second housing portion facing towards the first housing portion. In these embodiments, the recess structure may also be provided, such that at least part of the second housing portion may be higher than the bottom wall of the vehicle-bottom longitudinal beam to be located at a transverse side surface of the vehicle-bottom longitudinal beam. In this way, the spaces at the two sides of the vehicle-bottom longitudinal beam can be utilized for providing more battery cells, to improve the energy density of the battery, or the battery cells originally required to be arranged at the bottom layer of the battery can be transferred to the two sides of the vehicle-bottom longitudinal beam, which can further improve the height of the battery above the ground and ensure the sufficient space reserved between the bottom of the battery and the ground for the battery swapping operation. Moreover, because of the improvement of the height of the battery above the ground, the risks of hitting and scratching the bottom of the battery due to the protrusions of the ground and the like can be reduced, and the use safety and the service life of the battery are improved. Therefore, by providing the recess at the top of the housing, the problem of low space utilization rate can be effectively solved, which is beneficial to the improvement of the safety and reliability of the battery and to the battery swapping design. Moreover, the first housing portion may also have a bottom wall at least partly higher than the vehicle-bottom longitudinal beam, so that the first housing portion can have a larger space for arranging the battery cell, thereby improving the energy density.

In some embodiments, the first housing portion has a docking structure disposed at a side wall of the first housing portion perpendicular to the first direction. The docking structure is configured to dock with the vehicle to allow for current conduction and/or liquid conduction. In these embodiments, a docking direction of the docking structure may be provided to be in the first direction to allow the docking structure to dock with the vehicle in the first direction, which can reduce a space where the docking structure and the battery cell are superposed in the second direction, and is beneficial to more fully utilize the space of the battery in the second direction and improve the energy density.

In some embodiments, the docking structure is adapted to be disposed at an end of the first housing portion close to the recess in the second direction, allowing the docking structure to be at least partially extended between two longitudinal beams of the vehicle-bottom longitudinal beam. In these embodiments, a height of the docking structure at the vehicle end can be improved, so that the docking structure is not prone to being bumped by foreign matters or soaked in water during operation of the vehicle, and safety can be improved.

In some embodiments, the first housing portion has a docking structure disposed at an end wall of the first housing portion perpendicular to the second direction and close to the recess. The docking structure is adapted to dock in the first direction or in the second direction, and the docking structure is configured to dock with the vehicle to allow for current conduction and/or liquid conduction. In these embodiments, the docking structure can be arranged in a space of the first housing portion facing towards one side of the beam, and a docking structure of the vehicle end can be correspondingly arranged, so that the docking of the battery and the vehicle can be provided between the vehicle body and the battery housing without being exposed, which may enhance the protection for the docking structure and improve safety.

In some embodiments, a mounting structure is disposed on the housing and is configured to detachably mount the battery to the vehicle, so that the battery is detachable relative to the vehicle, thereby meeting the requirements for replacement, charging, maintenance, and the like of the battery. A battery swapping frame used for accommodating the battery in the related art is omitted, and a mounting space proportion of the battery swapping frame is reduced. Further, a volume energy density of the battery can be increased. Moreover, since the battery swapping frame is omitted, the cost can be reduced, a load of the whole vehicle can be reduced, and battery swapping efficiency can be improved.

In some embodiments, the mounting structure includes a plurality of sub-mounting portions. At least part of the plurality of sub-mounting portions is located in the recess. At least part of the sub-mounting portions can obtain the protection from the recess, to avoid being bumped and damaged, and can prevent the occurrence of a problem that the at least part of the sub-mounting portions cannot be detached and replaced and the like due to corrosion on the at least part of the sub-mounting portions by splashed muddy water.

In some embodiments, at least part of the plurality of sub-mounting portions is located at a bottom wall of the recess; and/or at least part of the plurality of sub-mounting portions is located at a side wall of the recess. Thus, a flexible design can be implemented.

In some embodiments, the mounting structure includes a plurality of sub-mounting portions. At least part of the plurality of sub-mounting portions is located outside the recess. Therefore, the sub-mounting portion located outside the recess may not be limited by the space in the recess, and can be flexibly designed from its structure and its position.

In some embodiments, at least part of the plurality of sub-mounting portions is located at an end wall of each of the two second housing portions close to the recess in the second direction, which is beneficial to a protection on the sub-mounting portion and an improvement in connection reliability of the battery.

In some embodiments, at least part of the plurality of sub-mounting portions is located at an end wall of the first housing portion close to the recess in the second direction, which is beneficial to the protection on the sub-mounting portion and the improvement of the connection reliability of the battery.

In some embodiments, at least part of the plurality of sub-mounting portions is located at a surface of each of the two second housing portions facing away from the first housing portion. Therefore, it is convenient to observe whether the mounting is in place, and processing of the sub-mounting portion is facilitated.

In some embodiments, several ones of the plurality of sub-mounting portions are located at a surface of the housing parallel to the first direction and are arranged at intervals in the first direction. Therefore, it is beneficial to an improvement in dispersity and uniformity of stress distribution, to an improvement in a stress concentration problem of the sub-mounting portion, to an improvement in connection reliability of each sub-mounting portion, and a further improvement in the mounting stability and reliability of the battery.

In some embodiments, at least part of the plurality of sub-mounting portions is located at a surface of the housing perpendicular to the first direction. Thus, a flexible design can be implemented.

In some embodiments, several ones of the plurality of sub-mounting portions are located at the surface of the housing perpendicular to the first direction and are arranged at intervals in a direction where the first housing portion and the two second housing portions are parallel to each other. Therefore, the space can be fully utilized, the stress of the sub-mounting portion can be dispersed, and the connection reliability of the battery can be improved.

In some embodiments, in the second direction, a maximum dimension of the mounting structure is smaller than at least one of a maximum dimension of the first housing portion and a maximum dimension of each of the two second housing portions, such that there is a space for arranging the battery cell.

In some embodiments, the battery cell is accommodated in a part of the housing that overlaps with a projection of the mounting structure in the second direction. Therefore, the space can be fully utilized to improve the energy density of the battery.

In some embodiments, the housing has a mounting groove disposed at an outer surface of the housing. The mounting groove is configured for an arrangement of the mounting structure. Therefore, the mounting structure is arranged in the mounting groove, so that the mounting structure can be protected, and reliability of the connection is improved.

In some embodiments, a dimension L1 of the battery in the first direction is smaller than a dimension L2 of the battery in a third direction. The first housing portion and the two second housing portions are parallel to each other in the third direction. The dimension of a single battery is small, which can reduce deformation of the battery, and is beneficial to an improvement in an assembly success rate of the battery.

In some embodiments, an end wall of each of the two second housing portions adapted to face towards the vehicle-bottom longitudinal beam in the second direction is closer to an end wall of each of the two second housing portions adapted to face away from the vehicle-bottom longitudinal beam in the second direction than an end surface of the vehicle-bottom longitudinal beam adapted to face away from the battery in the second direction. Therefore, collision or unnecessary space occupation can be avoided.

In some embodiments, a height difference H between a top wall of the first housing portion and a top wall of the second housing portion in the vertical direction is smaller than or equal to 100 mm. Therefore, a sufficient space is reserved above the top wall of the first housing portion to avoid the vehicle-bottom longitudinal beam, so that the second housing portions can fully utilize the spaces at the two side of the vehicle-bottom longitudinal beam to improve the energy density of the battery and/or increase the height of the battery above the ground.

In some embodiments, a top wall of the second housing portion is adapted to be higher than a height centerline of the vehicle-bottom longitudinal beam. Therefore, the spaces at the two side of the vehicle-bottom longitudinal beam can be fully utilized for providing the battery cell, to improve the energy density of the battery.

In some embodiments, a top surface of the battery cell accommodated in the second housing portion is adapted to be higher than a height center of the vehicle-bottom longitudinal beam. Therefore, the spaces at the two side of the vehicle-bottom longitudinal beam can be fully utilized for providing the battery cell, to improve the energy density of the battery.

In some embodiments, a total height H4 of the battery cells accommodated in the second housing portion is greater than a total height H3 of the battery cells accommodated in the first housing portion, so that the distribution of the battery cells can make full use of the space in the housing, which is beneficial to an improvement in the energy density of the battery or an increase in the height of the battery above the ground.

In some embodiments, a plurality of battery cells is disposed in the housing. The plurality of battery cells includes electrode terminals having one orientation. Therefore, assembly efficiency can be improved.

In some embodiments, a plurality of battery cells is disposed in the housing. The plurality of battery cells includes electrode terminals, and electrode terminals of at least two battery cells of the plurality of battery cells have different orientations. Thus, a flexible arrangement can be achieved.

In some embodiments, orientations of electrode terminals of the battery cells in the first housing portion are different from orientations of electrode terminals of the battery cells in the two second housing portions.

In some embodiments, at least one layer of battery cells along a height direction of the battery are arranged in each of the first housing portion and the two second housing portions, which facilitates an improvement in the assembly efficiency of the battery, and is beneficial to simplification of an electrical connection and the like. In addition, by controlling parameters like the number of layers or layer height, the space can be fully utilized to improve the energy density of the battery.

In some embodiments, along the height direction of the battery, a number of layers of battery cells arranged in the first housing portion is smaller than or equal to a number of layers of battery cells arranged in each of the two second housing portions. Therefore, the space can be fully utilized, and the energy density of the battery can be improved.

In some embodiments, a dimension of battery cells in a single layer in the first housing portion along the height direction of the battery is the same as a dimension of battery cells in a single layer in each of the two second housing portions along the height direction of the battery. Therefore, processing is facilitated, full utilization of the space is beneficial, and the energy density of the battery is improved.

In some embodiments, a dimension of battery cells in a single layer in the first housing portion along the height direction of the battery is smaller than a dimension of battery cells in a single layer in each of the two second housing portions along the height direction of the battery, which is beneficial to the full utilization of the space and the improvement of the energy density of the battery.

In some embodiments, at least one layer of battery modules along a height direction of the battery are arranged in each of the first housing portion and the two second housing portions. Each of the battery modules includes a plurality of battery cells arranged in a direction perpendicular to the height direction of the battery. By arranging the battery cells in groups, the improvement of the assembly efficiency of the battery is facilitated, which is beneficial to the simplification of the electrical connection and the like.

In some embodiments, a number of layers of battery modules arranged in the first housing portion is smaller than or equal to a number of layers of battery modules arranged in each of the two second housing portions. Therefore, it is beneficial to the full utilization of the space and the improvement of the energy density of the battery.

In some embodiments, a dimension of battery modules in a single layer in the first housing portion along the height direction of the battery is the same as a dimension of battery modules in a single layer in each of the two second housing portions along the height direction of the battery. Therefore, the processing is facilitated. Moreover, it is beneficial to the full utilization of the space and the improvement of the energy density of the battery.

In some embodiments, a dimension of battery modules in a single layer in the first housing portion along the height direction of the battery is smaller than a dimension of battery modules in a single layer in each of the two second housing portions along the height direction of the battery, which is beneficial to the full utilization of the space and the improvement of the energy density of the battery.

In some embodiments, a plurality of battery modules is arranged in the housing, several ones of the plurality of battery modules being arranged in parallel in the first direction; and/or a plurality of battery modules is arranged in the housing, several ones of the plurality of battery modules being arranged in parallel in a second direction. The first housing portion and the two second housing portions are arranged in the second direction. Therefore, a flexible arrangement can be achieved, and the space can be fully utilized.

In some embodiments, the battery further includes at least one temperature adjustment member. The at least one temperature adjustment member is disposed in each of the first housing portion and the two second housing portions. Therefore, the battery cells in the first housing portion and the battery cells in the second housing portion can each obtain temperature adjustment, so that the battery can operate at a proper temperature, to improve the operation reliability and the service life of the battery and improve operation energy efficiency of the battery.

In some embodiments, the at least one temperature adjustment member includes a plurality of temperature adjustment members. The plurality of temperature adjustment members is disposed in the first housing portion and the two second housing portions, respectively. Therefore, full adjustment on the temperature can be realized.

In some embodiments, the at least one temperature adjustment member is disposed between battery cells in adjacent layers in the height direction of the battery; or the at least one temperature adjustment member is disposed between battery modules in adjacent layers in the height direction of the battery. Therefore, full adjustment on the temperature can be realized.

In some embodiments, the battery is the battery according to the claims. A number of temperature adjustment members disposed in the first housing portion is smaller than or equal to a number of temperature adjustment members disposed in each of the two second housing portions. In this way, the space is reasonably utilized, which not only ensures the energy density of the battery, but also ensures a temperature adjustment effect.

In some embodiments, at least part of a plurality of temperature adjustment members are disposed parallel to the first direction; and/or at least another part of the plurality of temperature adjustment members are disposed perpendicular to the first direction. The arrangement of the temperature adjustment member can be simplified, the space is fully utilized, and the temperature adjustment effect is improved.

In some embodiments, the first housing portion and the two second housing portions share the at least one temperature adjustment member. The design of the temperature adjustment member can be simplified.

In some embodiments, the first housing portion and the two second housing portions are at least partially formed integrally. Therefore, connection reliability of the first housing portion and the second housing portion can be improved, and overall reliability of the battery can be improved. Moreover, assembly of the first housing portion and the second housing portion can be simplified, and the assembly efficiency of the battery is improved.

In some embodiments, the housing includes a housing body and a housing cover. An area of the housing body is greater than an area of the housing cover. The housing body is an integrally-formed part and has an opening defined thereon. The housing cover covers the opening, and the housing body forms a part of the first housing portion and a part of each of the two second housing portions. The connection reliability of the first housing portion and the second housing portion can be further improved, the overall reliability of the battery is improved, and the assembly efficiency of the battery is improved.

In some embodiments, the opening includes a first opening corresponding to the first housing portion and a second opening corresponding to each of the two second housing portions; and the housing cover includes a first housing cover covering the first opening and a second housing cover covering the second opening. The first housing cover and the second housing cover are formed separately or formed integrally. Therefore, assembly and processing are facilitated, and the design flexibility is good.

According to a second aspect, an embodiment of the present disclosure provides a vehicle, including a vehicle-bottom longitudinal beam and the battery as described above. The vehicle-bottom longitudinal beam extends into the recess. A part of a top wall of the housing other than the recess is higher than a lower end surface of the vehicle-bottom longitudinal beam.

### BRIEF DESCRIPTION OF THE DRAWINGS

In order to clearly explain technical solutions of embodiments of the present disclosure, accompanying drawings used in the embodiments will be briefly described below. It should be understood that the following drawings illustrate only some embodiments of the present disclosure and therefore should not be construed as limiting the scope of the present disclosure. Based on these drawings, other related drawings can be obtained by those of ordinary skill in the art without creative effort.
FIG. 1 is a schematic view of a vehicle according to some embodiments of the present disclosure.
FIG. 2 is a perspective view of a battery according to some embodiments of the present disclosure.
FIG. 3 is an exploded view of the battery shown in FIG. 2.
FIG. 4 is a front view of the battery shown in FIG. 2.
FIG. 5 is a cross-sectional view of the battery shown in FIG. 2.
FIG. 6 is an exploded view of a battery and a vehicle-bottom longitudinal beam according to some embodiments of the present disclosure.
FIG. 7 is an assembly view of a battery and a vehicle-bottom longitudinal beam according to some embodiments of the present disclosure.
FIG. 8 is an assembled front view of the battery and the vehicle-bottom longitudinal beam shown in FIG. 7.
FIG. 9 is an assembled top view of the battery and the vehicle-bottom longitudinal beam shown in FIG. 7.
FIG. 10 is an assembled side view of the battery and the vehicle-bottom longitudinal beam shown in FIG. 7.
FIG. 11 is a top view of a battery according to some embodiments of the present disclosure.
FIG. 12 is a schematic view of an interior of a battery according to some embodiments of the present disclosure.
FIG. 13 is a schematic view of an interior of a battery according to some embodiments of the present disclosure.
FIG. 14 is a perspective view of a battery according to some embodiments of the present disclosure.
FIG. 15 is a perspective view of a battery according to some embodiments of the present disclosure.
FIG. 16 is a perspective view of a battery according to some embodiments of the present disclosure.
FIG. 17 is an assembly view of a battery and a vehicle-bottom longitudinal beam according to some embodiments of the present disclosure.
FIG. 18 is a perspective view of a battery according to some embodiments of the present disclosure.
FIG. 19 is a perspective view of a battery according to some embodiments of the present disclosure.
FIG. 20 is a schematic plane view of a battery swapping station according to some embodiments of the present disclosure.

Reference numerals:
vehicle 1000; battery 1; recess 10; bottom wall of recess 10a; side wall of recess 10b; battery layer 2; battery module 3; battery cell 4; housing 5; first housing portion 51; first cavity portion 511; second cavity portion 512; second housing portion 52; housing body 53; first opening 531; second opening 532; housing cover 54; first housing cover 541; second housing cover 542; transition portion 55; mounting structure 6; sub-mounting portion 61; docking structure 7; sub-docking portion 71; first sub-docking portion 71a; second sub-docking portion 71b; box body 72; docking body 73; docking header 74; temperature adjustment plate 8; first adjustment plate 81; second adjustment plate 82; third adjustment plate 83; fourth adjustment plate 84; fifth adjustment plate 85; common horizontal plate 86; vehicle-bottom longitudinal beam 200; longitudinal beam 201; connection structure 300; front wheel 400; rear wheel 500; battery swapping station 2000; battery swapping region 600; first region 601; second region 602; transverse direction Y; longitudinal direction X; vertical direction Z.

### DETAILED DESCRIPTION

In order to make the purpose, technical solution and advantages of embodiments of the present disclosure clearer, the following will provide a clear description of the technical solution in the embodiments of the present disclosure in combination with the accompanying drawings in the embodiments of the present disclosure. Obviously, the described embodiments are some of the embodiments of the present disclosure, rather than all of them. Based on the embodiments of the present disclosure, all other embodiments obtained by those skilled in the art without any inventive effort fall within the scope of the present disclosure.

Unless otherwise defined, all technical and scientific terms used herein have the same meaning as commonly understood by those skilled in the art of the present disclosure. Terms in a specification of the present disclosure herein are only used for the purpose of describing specific embodiments, and are not intended to limit the present disclosure. The terms "including", "having" and any variation thereof in the description and claims of the present disclosure and in the preceding description of the drawings are intended to cover non-exclusive inclusion. In the description and claims of the present disclosure or in the preceding description of the drawings, the terms "first", "second" and the like are used to distinguish different objects, rather than describing a particular order or a primary and secondary relation.

In the present disclosure, reference to "embodiment" means that a particular feature, structure, or characteristic described in conjunction with the embodiment may be included in at least one embodiment of the present disclosure. The presence of the term at each place in the description does not necessarily refer to the same embodiment, nor does it refer to a separate or alternative embodiment that is mutually exclusive of other embodiments.

In the description of the present disclosure, it should be noted that, unless otherwise clearly specified and limited, terms such as "connected" and "connected to" should be understood in a broad sense. For example, it may be a fixed connection or a detachable connection or connection as one piece; or a direct connection or an indirect connection through an intermediate. For those of ordinary skill in the art, the specific meaning of the above terms in the present disclosure should be understood according to specific circumstances.

In the present disclosure, the term "and/or" only represents a relationship between correlated objects, including three relationships. For example, "A and/or B" may mean three situations: A only, B only, or both A and B. In addition, the character "/" in the present disclosure generally represents an "or" relationship between the correlated objects preceding and succeeding the character.

In the embodiments of the present disclosure, the same reference numerals denote the same components, and a detailed description of the same components is omitted in different embodiments for the sake of brevity. It is to be understood that the thickness, length, width and other dimensions of the various components in the embodiments of the present disclosure illustrated in the drawings, as well as the overall thickness, length, width, and other dimensions of the integrated device, are illustrative only and should not be construed to limit the present disclosure in any way.

The term "a plurality of" as used herein refers to two or more (including two).

The battery cell in the present disclosure may include a lithium ion secondary battery, a lithium ion primary battery, a lithium sulfur battery, a sodium lithium ion battery, a sodium ion battery or a magnesium ion battery, etc., which are not limited in the embodiments of the present disclosure. The battery cell may be in a shape of a cylinder, a flat body, a cuboid or other shapes, which are not limited in the embodiments of the present disclosure. The battery cell is generally divided into three types based on a packaging method: a cylinder-shaped battery cell, a square-shaped battery cell and a soft-pack battery cell, which are not limited in the embodiment of the present disclosure.

The battery mentioned in the embodiments of the present disclosure refers to a single physical module including one or more battery cells to provide a higher voltage and capacity. The battery in the embodiments of the present disclosure includes a housing for packaging one or more battery cells or a plurality of battery modules. The housing can prevent liquid or other foreign matter from affecting charging or discharging of the battery cell.

In the battery, a plurality of battery cells may be connected in series or in parallel or in series and parallel. The expression "in series and parallel" means that the plurality of battery cells is connected both in series and in parallel. The plurality of battery cells may be directly connected in series or in parallel or in series and parallel, and then accommodated in the housing as a whole. Of course, for the battery, the plurality of battery cells may be connected in series or in parallel or in series and parallel to form a battery module, and then a plurality of battery modules may be connected in series or in parallel or in series and parallel and accommodated in the housing as a whole. In addition, the battery may further have other structures. For example, the battery may further include a busbar configured to implement an electrical connection between the plurality of battery cells.

The battery cell includes a packaging housing, an electrode assembly, and an electrolyte. The packaging housing is configured to accommodate the electrode assembly and the electrolyte. The electrode assembly consists of a positive electrode plate, a negative electrode plate and a separator. Operation of the battery cell primarily relies on a movement of metallic ions between the positive and negative electrode plates. The positive electrode plate includes a positive current collector and a positive electrode active material layer. The positive electrode active material layer is coated at a surface of the positive current collector. A part of the positive current collector that is not coated with the positive electrode active material layer protrudes from a part of the positive current collector that has been coated with the positive electrode active material layer. The part of the positive current collector that is not coated with the positive active material layer serves as a positive electrode tab. A lithium-ion battery is taken as an example, a material of the positive current collector may be aluminum, and a positive electrode active material may be lithium cobalt oxide, lithium iron phosphate, ternary lithium or lithium manganate, etc. The negative electrode plate includes a negative current collector and a negative electrode active material layer. The negative electrode active material layer is coated at a surface of the negative current collector. A part of the negative current collector that is not coated with the negative electrode active material layer protrudes from a part of the negative current collector that has been coated with the negative electrode active material layer. The part of the negative current collector that is not coated with the negative electrode active material layer serves as a negative electrode tab. A material of the negative current collector may be copper, and a negative electrode active material may be carbon, silicon, etc. For ensuring no fusing during passing through a high current, a plurality of positive electrode tabs is provided and stacked together, and a plurality of negative electrode tabs is provided and stacked together. In addition, the electrode assembly may have a winding structure or a laminated structure, and the embodiments of the present disclosure are not limited thereto.

In recent years, new energy vehicles have developed by leaps and bounds. In the field of electric vehicles, batteries play an irreplaceable and important role as a power source of electric vehicles. As a core component of new energy vehicles, batteries have high requirements in terms of safety and cycle life.

The inventor finds that the battery is generally disposed at a bottom of the vehicle and located below a vehicle-bottom longitudinal beam. In order to improve endurance mileage, a height of the battery can only be increased as much as possible in a case where a width and length of a vehicle body are limited, resulting in a small height of the battery above ground. In this way, on the one hand, when the ground has protrusions, the battery is easily bumped and damaged. On the other hand, during battery swapping operation, a groove needs to be disposed in advance in a battery swapping station, or the vehicle needs to be lifted up, resulting in a high battery swapping cost.

Based on the above considerations, the inventor has designed a battery through in-depth research. By providing a recess at a top of the battery, which is adapted to avoid the vehicle-bottom longitudinal beam, spaces at two sides of the vehicle-bottom longitudinal beam can be utilized more effectively for providing battery cells, to improve an energy density of the battery, or battery cells originally required to be arranged at a bottom layer of the battery can be transferred to the two sides of the vehicle-bottom longitudinal beam, which can further improve the height of the battery above the ground and ensure a sufficient space reserved between the bottom of the battery and the ground for a battery swapping operation. Moreover, because of an improvement in the height of the battery above the ground, risks of hitting and scratching the bottom of the battery due to the protrusions of the ground and the like can be reduced, and use safety and a service life of the battery are improved. Therefore, by providing the recess at a top of the housing, the problem of low space utilization rate can be effectively solved, which is beneficial to an improvement in safety and reliability of the battery and to battery swapping design.

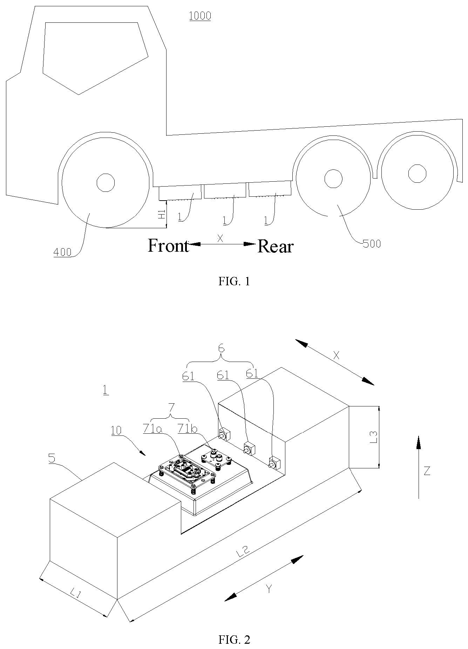

FIG. 1 is a schematic structural view of a vehicle 1000 according to some embodiments of the present disclosure. With reference to FIG. 1, the vehicle 1000 may be a fuel vehicle, a gas vehicle or a new energy vehicle. The new energy vehicle may be a pure electric vehicle, a hybrid vehicle or an extended-range vehicle, etc. The battery 1 may be configured to supply power to the vehicle 1000. For example, the battery 1 may serve as an operating power source for the vehicle 1000. The vehicle 1000 may also include a controller and a motor. The controller is configured to control the battery 1 to supply power to the motor, for example, to meet operational power consumption requirements for starting, navigation and driving of the vehicle 1000. In some embodiments of the present disclosure, the battery 1 can not only serve as an operating power supply of the vehicle 1000, but also can serve as a drive power supply of the vehicle 1000 to replace or partially replace fuel or natural gas to provide driving power for the vehicle 1000.

As shown in FIG. 2 to FIG. 4, the battery 1 includes a battery cell 4 and a housing 5. The battery cell 4 is accommodated in the housing 5. The housing 5 includes a first housing portion 51 and two second housing portions 52 located at two sides of the first housing portion 51 in a first direction X, i.e. the housing 5 includes a first housing portion 51 and two second housing portions 52, and one second housing portion 52 is provided at each of the two sides of the first housing portion 51 in the first direction X. The battery cell 4 is disposed in each of the first housing portion 51 and the two second housing portions 52.

A recess 10 is defined by the first housing portion 51 and the two second housing portions 52 together. The recess 10 is a through recess in the first direction X and opened towards a second direction Z. The battery 1 is adapted to be disposed at a bottom of a vehicle 1000. A vehicle-bottom longitudinal beam 200 of the vehicle is adapted to pass through the recess in the first direction X and to be detachably mounted in the recess 10 in the second direction Z. The first direction X intersects the second direction Z.

In the present disclosure, the "first direction X" refers to a length direction of the vehicle 1000, or a front-rear direction of the vehicle 1000 and a longitudinal direction of the vehicle 1000; the "third direction Y" refers to a width direction of the vehicle 1000, or a left-right direction of the vehicle 1000 and a transverse direction of the vehicle 1000; and the "second direction Z" refers to an upward direction of a height direction of the vehicle 1000.

In the above embodiments, a number and an arrangement manner of battery cells 4 accommodated in the first housing portion 51 are not limited. One or more battery cells 4 accommodated in the first housing portion 51 may be provided. When a plurality of battery cells 4 are provided, the plurality of battery cells 4 may be set in groups or separately. Similarly, a number and an arrangement manner of battery cells 4 accommodated in the second housing portion 52 are unlimited. One or more battery cells 4 accommodated in the second housing portion 52 may be provided. When a plurality of battery cells 4 are provided, the plurality of battery cells 4 may be set in groups or separately.

It should be noted that "the vehicle-bottom longitudinal beam 200 being mounted at the recess 10" means that the vehicle-bottom longitudinal beam 200 is at least partially extended into the recess 10 but is not completely located in the recess 10. More specifically, a segment of the vehicle-bottom longitudinal beam 200 in the longitudinal direction can be extended into the recess 10, and further a part or all of the segment in a vertical direction can be extended into the recess 10.

With the battery 1 according to the embodiments of the present disclosure, since the recess 10 is defined at the top of the housing 5 and adapted to avoid the vehicle-bottom longitudinal beam 200, it is beneficial to realizing that a top wall of the battery cell 4 accommodated in the second housing portion 52 is higher than a bottom surface of the vehicle-bottom longitudinal beam 200. In this way, the spaces at the two sides of the vehicle-bottom longitudinal beam 200 can be utilized more effectively for providing the battery cells 4, to improve the energy density of the battery 1, or the battery cells 4 originally required to be arranged at the bottom layer of the battery 1 can be transferred to the two sides of the vehicle-bottom longitudinal beam 200, which can further improve the height of the battery 1 above the ground and ensure the sufficient space reserved between the bottom of the battery 1 and the ground for a battery swapping operation. Moreover, because of the improvement of the height of the battery 1 above the ground, the risks of hitting and scratching the bottom of the battery 1 due to the protrusions of the ground and the like can be reduced, and the use safety and the service life of the battery 1 are improved. Therefore, by providing the recess 10 at the top of the housing 5, the problem of low space utilization rate can be effectively solved, which is beneficial to the improvement of the safety and reliability of the battery 1 and to battery swapping design.

Specifically, in the embodiments of the present disclosure, the form of the recess 10 on the battery 1 is not limited. For example, the following describes embodiments in two aspects, but the following embodiments are not limited by the present disclosure.

### First embodiment

As shown in FIG. 2 to FIG. 15, ends of the two second housing portions 52 at one side each protrude from the first housing portion 51 in the second direction Z, to define the recess 10 by an end wall of the first housing portion 51 perpendicular to the second direction Z and side walls of the two second housing portions 52 facing towards the first housing portion. Therefore, the spaces at the two sides of the vehicle-bottom longitudinal beam 200 can be utilized for providing the battery cells 4, to improve the energy density of the battery 1, or the battery cells 4 originally required to be arranged at the bottom layer of the battery 1 can be transferred to the two sides of the vehicle-bottom longitudinal beam 200, which can further improve the height of the battery 1 above the ground.

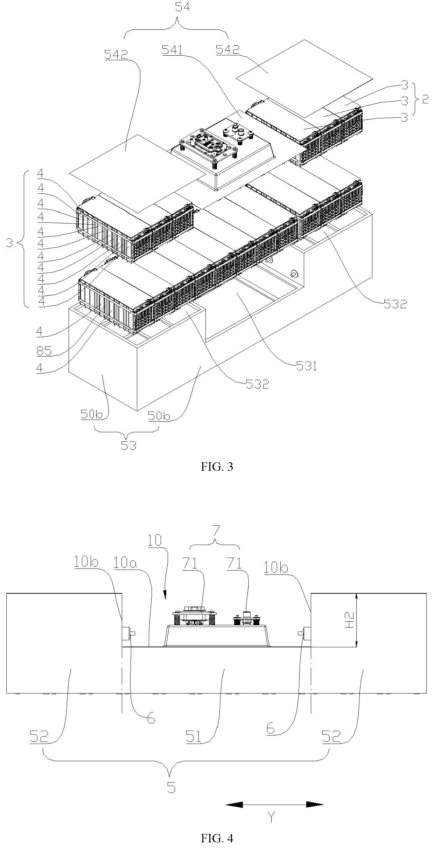

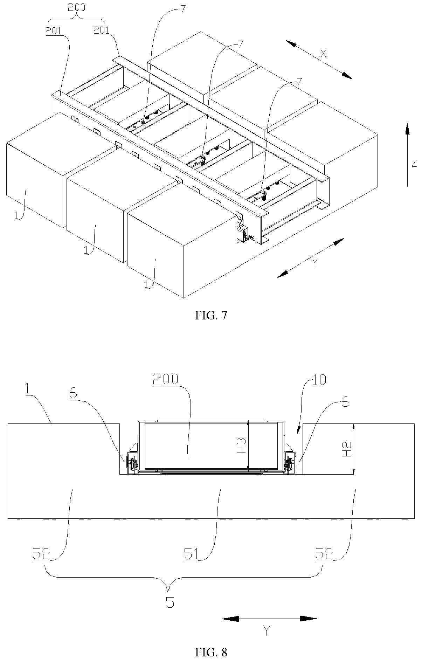

As shown in FIG. 4 and FIG. 8, an end wall of the first housing portion 51 facing towards the recess 10 is adapted to be lower than the vehicle-bottom longitudinal beam 200. Therefore, the vehicle-bottom longitudinal beam 200 is allowed to pass over a top of the first housing portion 51. A space is reserved at the top of the first housing portion 51 for mounting other structures of the vehicle 100 or other structures of the battery 1.

For example, when the battery 1 and the vehicle 1000 are mounted in place, any position of a top wall of the first housing portion 51 is not higher than the bottom surface of the vehicle-bottom longitudinal beam 200. Therefore, a space above the top wall of the first housing portion 51 can be utilized for providing other structural components and the like, and the arrangement of the battery cells 4 in the first housing portion 51 can be simplified. It is beneficial to implementation of a power connection and temperature adjustment design of each battery cell 4 in the first housing portion 51.

As shown in FIG. 2 and FIG. 4, the battery 1 includes a docking structure 7, and the docking structure 7 is configured to dock with the vehicle 100 to allow for current conduction and/or liquid conduction.

In the above embodiments, since the battery 1 includes the docking structure 7, the current conduction with the vehicle 1000 or liquid conduction with the vehicle 1000 or the current conduction and liquid conduction with the vehicle 1000 simultaneously can be implemented. For example, when the docking structure 7 implements current conduction, current transmission between the vehicle 1000 and the battery 1 can be implemented, to implement power supply for the vehicle 1000 by the battery 1, control of the vehicle 1000 to the battery 1, and the like. For example, when the docking structure 7 implements liquid conduction, heat transfer between a refrigerating medium system of the vehicle 1000 and the battery 1 may be implemented. In this way, a temperature of the battery 1 can be adjusted by using the refrigerating medium system to improve the operation reliability and safety of the battery 1, or waste heat of the battery 1 can be absorbed by using the refrigerating medium system to meet a heat source requirement of a heat-pump air-conditioning system of the vehicle 1000, and details are omitted herein.

For example, as shown in FIG. 2 to FIG. 4, the docking structure 7 is disposed in the recess 10 and is adapted to be extended between two longitudinal beams 201 of the vehicle-bottom longitudinal beam 200. The docking structure 7 is disposed in the recess 10. In this way, not only does the docking structure 7 not completely extend beyond a top wall of the battery 1 when the docking structure 7 faces upwards to increase an overall height of the battery 7, thereby allowing for more abundant operable spaces reserved by the vehicle bottom during replacement of the battery 1, but the docking structure of the vehicle 1000 and the docking structure 7 of the battery 1 can also complete a docking action in the recess 10, making the docking safer.

Optionally, the docking structure 7 is disposed at the end wall of the first housing portion 51 facing towards the recess 10. For example, the docking structure 7 is disposed at the top wall of the first housing portion 51, the two longitudinal beams 201 are each extended into the recess 10, and the docking structure 7 is extended into a space between the two longitudinal beams 201. Therefore, an arrangement of the docking structure 7 is facilitated by using the space in the recess 10. The docking structure of a vehicle end may be correspondingly disposed, so that docking of the battery 1 and the vehicle 1000 may be provided between the vehicle body and the battery housing without being exposed, which may enhance protection for the docking structure 7 and improve safety.

Since the docking structure 7 may be disposed in the space in the recess 10 and located between the two longitudinal beams 201, a space outside the two longitudinal beams 201 can be prevented from being occupied by the docking structure 7, which further fully utilizes the space outside the two longitudinal beams 201 to arrange the battery cells 4, and is beneficial to the improvement of the energy density of the battery 1. On the other hand, since the docking structure 7 is located between the two longitudinal beams 201, compared with the solution where the docking structure 7 is disposed at the side surface or the bottom surface of the battery 1, the position of the docking structure 7 is hidden, so that the two longitudinal beams 201 and the battery 1 can be protected, collision and damage to the docking structure 7 are avoided, and the reliability of docking is improved. Moreover, during operation of the vehicle 1000, splashed muddy water and the like can be effectively prevented from being contacted with the docking structure 7, causing the docking structure 7 to be eroded and damaged by the muddy water and the like, avoiding problems such as docking failure, and improving the reliability of docking.

The docking structure 7 may be integrally disposed at an exterior of the first housing portion 51. Therefore, the docking structure 7 can be prevented from occupying a space of the housing 5 for storing the battery cell 4, and the energy density of the battery 1 is improved.

For example, as shown in FIG. 3 to FIG. 5, the docking structure 7 includes a box body 72, a docking body 73, and a docking header 74. The box body 72 is disposed at the end wall of the first housing portion 51 facing towards the recess 10. The docking body 73 is disposed in the box body 72. The docking header 74 is disposed outside the box body 72. The docking header 74 is connected to the docking body 73. The docking body 73 is connected to a circuit and/or a fluid circuit in the housing 5. Therefore, the docking structure 7 is simple and convenient to be processed and mounted, which can effectively prevent the docking structure 7 from occupying the space of the housing 5 for storing the battery cell 4, thereby improving the energy density of the battery 1.

In the above embodiments, the box body 72 may have a bottom wall or may have no bottom wall, which may be set according to an actual situation. In addition, the position of the top wall of the first housing portion 51 corresponding to the box body 72 may be hollowed-out or of an entity structure, which may be set according to an actual situation.

In the above embodiment, the composition of the docking body 73 is not limited. When used for implementing liquid conduction, the docking body 73 may include a pipeline, or may include a pipeline, a control valve, and the like. When used for implementing current conduction, the docking body 73 may include a wire, or may include a wire, a circuit board, and the like, and details are omitted herein.

The docking header 74 is adapted to dock with the vehicle in the second direction Z. For example, the docking header 74 is located at a top wall of the box body 72 and is adapted to be vertically connected upwards to the vehicle. Alternatively, the docking header 74 is adapted to dock with the vehicle in the first direction X. For example, the docking header 74 is located at a top wall or side wall of the box body 72 and is adapted to dock in a horizontal direction. Therefore, the space can be flexibly utilized to satisfy different docking requirements, with a wide application range.

The docking header 74 may dock with the vehicle in the first direction X, and the battery 1 may move in the second direction Z to allow the recess 10 to be fit with the vehicle-bottom longitudinal beam 200 and then move in the first direction X, allowing a docking header 74 of the battery 1 to dock with a docking header of the vehicle 1000. In this way, more docking buffer spaces do not need to be reserved in a height direction. The docking header 74 may also be configured to dock with the vehicle 1000 in the second direction Z, and the battery 1 may move in the second direction Z, such that the docking header 74 of the battery 1 docks with the docking header of the vehicle while the recess 10 is fit with the vehicle-bottom longitudinal beam 200, thereby reducing steps of replacing the battery 1 to the vehicle end. Therefore, efficiency can be improved, and the space at the vehicle-bottom longitudinal beam 200 can be more fully utilized, improving the energy density of the battery 1.

For example, when the battery 1 is mounted to the vehicle 1000, in response to the battery 1 being locked with the vehicle 1000 through an upward movement, in response to the docking header 74 being located at the top wall of the box body 72 and adapted to vertically dock with the vehicle upwards, during upward mounting of the battery 1, the docking structure 7 can be docked in place upwards. When the battery 1 is disassembled, the battery 1 is pulled downwards, and the docking structure 7 can be disengaged from its docking, so that the battery swapping operation of the battery 1 is simplified, and the battery swapping efficiency of the battery 1 is improved. In addition, a movement space required for docking in this manner is small, which can save space occupation caused by the docking, and is beneficial to the improvement of the energy density of the battery 1.

For another example, when the battery 1 is mounted to the vehicle 1000, in response to the battery 1 being locked with the vehicle 1000 by moving upwards and then moving in the horizontal direction (for example, horizontally forwards or backwards), in response to the docking header 74 being located on the top wall or the side wall of the box body 72 and being adapted to be docked in the horizontal direction (which may also be docked, for example, horizontally forwards or backwards), during the mounting of the battery 1, the battery 1 is pushed upwards and then horizontally, and the docking structure 7 can be docked in place in the horizontal direction. When the battery 1 is disassembled, actions are reversed, and the docking structure 7 can be disengaged from its docking, thereby meeting the battery swapping operation of the battery 1.

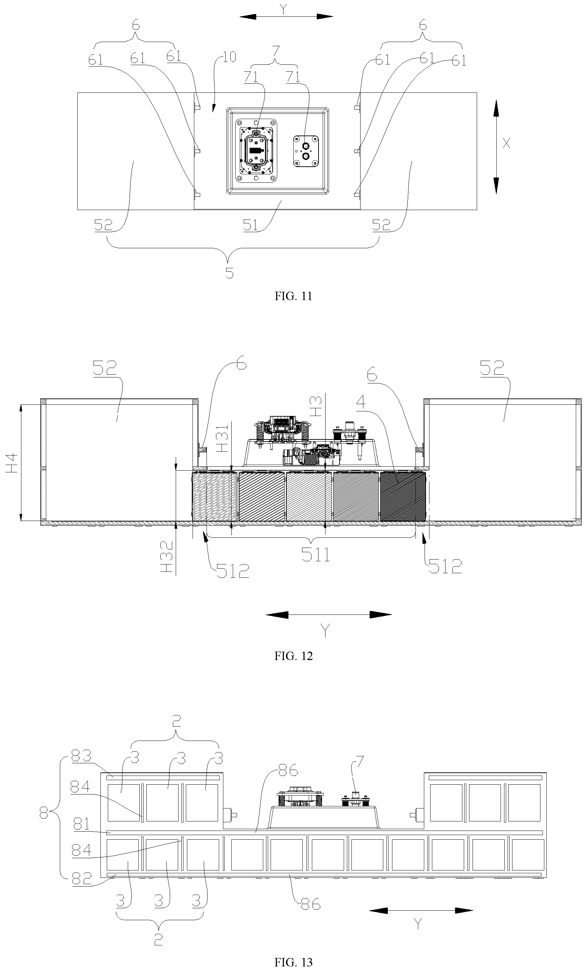

As shown in FIG. 11, the docking structure 7 may be located at a transverse center position of the top of the first housing portion 51. Therefore, by transversely centering the docking structure 7, a connection between the battery cell 4 or the temperature adjustment member 8 or the like in the housing 5 and the docking structure 7 is facilitated, a connection path of the docking structure 7 is simplified, and a space required by the connection path is saved, so that more battery cells 4 or battery cells 4 with greater volumes may be arranged in the housing 5, thereby improving the energy density of the battery 1. In addition, by transversely centering the docking structure 7, when the housing 5 has a mounting structure 6 for detachably mounting the battery 1 to the vehicle 1000, it is advantageous to center a center of gravity of battery 1 in the transverse direction, which allows stress distribution of each mounting structure 6 on the battery 1 to be uniform, improves problems of stress concentration of the mounting structure 6 and the like, and improves connection reliability and stability of the battery 1 and the vehicle-bottom longitudinal beam 200.

As shown in FIG. 11, the docking structure 7 is located at a longitudinal center position of the top of the housing 5. Therefore, by longitudinally centering the docking structure 7, the connection between the battery cell 4 or the temperature adjustment member 8 or the like in the housing 5 and the docking structure 7 is facilitated, the connection path of the docking structure 7 is simplified, and the space required by the connection path is saved, so that more battery cells 4 or battery cells 4 with greater volumes may be arranged in the housing 5, thereby improving the energy density of the battery 1. In addition, by longitudinally centering the docking structure 7, when the housing 5 has the mounting structure 6 for detachably mounting the battery 1 to the vehicle 1000, it is advantageous to center the center of gravity of battery 1 in the longitudinal direction, which allows the stress distribution of each mounting structure 6 on the battery 1 to be uniform, improves the problems of stress concentration of the mounting structure 6 and the like, and improves the connection reliability and stability of the battery 1 and the vehicle-bottom longitudinal beam 200.

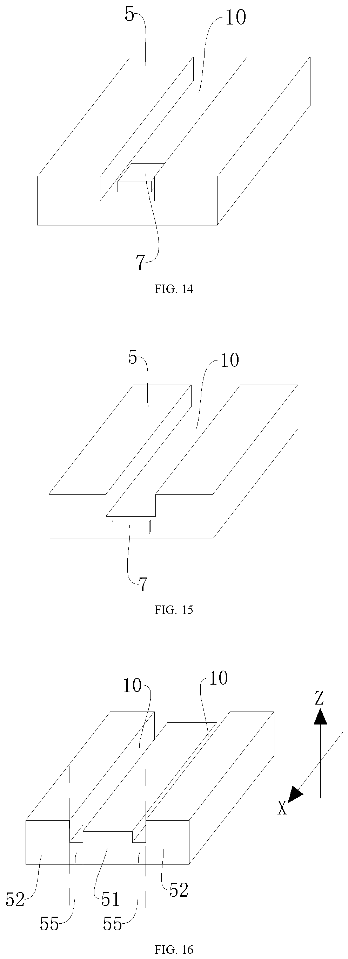

Of course, the present disclosure is not limited thereto. For example, the docking structure 7 may also be disposed at a position of an end of the top of the housing 5 in the first direction X (like as shown in FIG. 14) or may be disposed at an end surface of the housing 5 in the first direction X (like as shown in FIG. 15), so that docking requirements for vehicles 1000 in different forms may be matched.

It should be noted that there is no restriction relationship between the arrangement position of the docking structure 7 and a docking direction of the docking structure 7. For example, the docking structure 7 located at a top surface of the housing 5 shown in FIG. 14 may be configured to be docked in the second direction Z or in the first direction X. For another example, the docking structure 7 located at the end surface of the housing 5 shown in FIG. 15 may be configured to be docked in the second direction Z or in the first direction X

As shown in FIG. 11, the docking structure 7 includes a plurality of sub-docking portions 71. One sub-docking portion 71 corresponds to at least one docking header 74, and the plurality of sub-docking portions 71 has different docking functions. For example, one of the sub-docking portions 71 may be configured to implement current conduction between the battery 1 and the vehicle 1000, and another one of the sub-docking portions 71 may be configured to implement liquid conduction between the battery 1 and the vehicle 1000, thereby enriching docking function requirements of the battery 1 and the vehicle 1000.

Optionally, the plurality of sub-docking portions 71 has the same docking direction. Therefore, the battery 1 is moved in one direction, i.e., synchronous docking of the plurality of sub-docking portions 71 can be completed, thereby simplifying a docking operation and improving docking efficiency. Moreover, the docking structure 7 designed in this way is simple in structure and easy to be processed.

For example, the plurality of sub-docking portions 71 are arranged at intervals in a transverse direction of the housing 5 and/or a longitudinal direction of the housing 5. For example, the plurality of sub-docking portions 71 may be arranged at intervals in the transverse direction of the housing 5, but at nearly the same position in the longitudinal direction. For another example, the plurality of sub-docking portions 71 may be arranged at intervals in the longitudinal direction of the housing 5, but at nearly the same position in the transverse direction. For another example, the plurality of sub-docking portions 71 may be arranged at intervals in the transverse direction of the housing 5 and arranged at intervals in the longitudinal direction of the housing 5.

Therefore, since the plurality of sub-docking portions 71 are arranged at intervals, it can be ensured that the sub-docking portions 71 do not interfere with each other during docking and can be smoothly be docked. Moreover, by arranging the plurality of sub-docking portions 71 to be arranged at intervals in the transverse direction and/or the longitudinal direction of the housing 5, it is beneficial to satisfy that the docking directions of the plurality of sub-docking portions 71 are the same. For example, whether the plurality of sub-docking portions 71 are simultaneously docked upwards or simultaneously docked in the horizontal direction, it can be better satisfied that the docking directions of the plurality of sub-docking portions 71 are the same. In addition, since the plurality of sub-docking portions 71 are arranged at intervals in the transverse direction and/or the longitudinal direction of the housing 5, the plurality of sub-docking portions 71 may not need to be arranged at intervals in the vertical direction while meeting the requirements for spacing arrangement, thereby saving space occupation of the plurality of sub-docking portions 71 in the vertical direction, and facilitating ensuring a height of the bottom of the battery 1 above the ground.

### Second embodiment

As shown in FIG. 16 to FIG. 18, the first housing portion 51 is connected to the second housing portion 52 through a transition portion 55. Each of the first housing portion 51 and the second housing portion 52 extends beyond the transition portion 55 in the second direction Z. The recess 10 is defined by a side wall of the first housing portion 51 facing towards the second housing portion 52, an end wall of the transition portion 55 perpendicular to the second direction Z, and a side wall of the second housing portion 52 facing towards the first housing portion 51.

In the above technical solution, the recess structure may also be provided, such that at least part of the second housing portion 52 may be higher than the bottom wall of the vehicle-bottom longitudinal beam 200 to be located at a transverse side surface of the vehicle-bottom longitudinal beam 200. In this way, the spaces at the two sides of the vehicle-bottom longitudinal beam 200 can be utilized for providing more battery cells 4, to improve the energy density of the battery 1, or the battery cells 4 originally required to be arranged at the bottom layer of the battery 1 can be transferred to the two sides of the vehicle-bottom longitudinal beam 200, which can further improve the height of the battery 1 above the ground and ensure the sufficient space reserved between the bottom of the battery 1 and the ground for the battery swapping operation. Moreover, because of the improvement of the height of the battery 1 above the ground, the risks of hitting and scratching the bottom of the battery 1 due to the protrusions of the ground and the like can be reduced, and the use safety and the service life of the battery 1 are improved. Therefore, by providing the recess 10 with this structure at the top of the housing 5, the problem of low space utilization rate can be effectively solved, which is beneficial to the improvement of the safety and reliability of the battery 1 and to the battery swapping design. Moreover, the first housing portion 51 may also have a bottom wall at least partly higher than the vehicle-bottom longitudinal beam 200, so that the first housing portion 51 can have a larger space for arranging the battery cell 4, thereby improving the energy density.

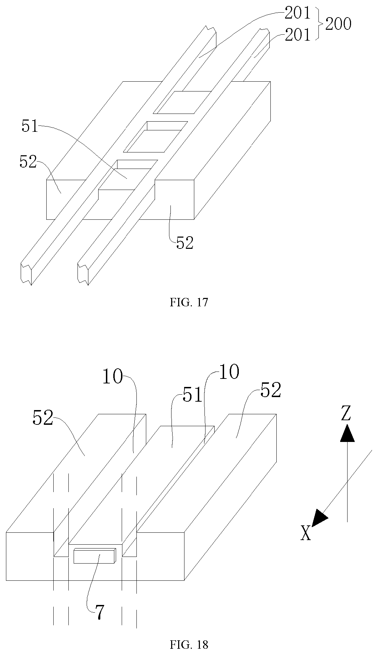

As shown in FIG. 18, the first housing portion 51 has a docking structure 7 disposed at a side wall of the first housing portion 51 perpendicular to the first direction X. The docking structure 7 is configured to dock with the vehicle to allow for current conduction and/or liquid conduction.

In these embodiments, a docking direction of the docking structure 7 may be provided to be in the first direction X to allow the docking structure to dock with the vehicle in the first direction X, which can reduce a space where the docking structure 7 and the battery cell 4 are superposed in the second direction Z, and is beneficial to more fully utilize the space of the battery 1 in the second direction Z and improve the energy density.

In the foregoing embodiment, since the battery 1 includes the docking structure 7, the current conduction with the vehicle 1000 or liquid conduction with the vehicle 1000 or simultaneously current conduction and liquid conduction with the vehicle 1000 can be implemented. For example, when the docking structure 7 implements current conduction, the current transmission between the vehicle 1000 and the battery 1 can be implemented, to implement power supply for the vehicle 1000 by the battery 1, the control of the vehicle 1000 to the battery 1, and the like. For example, when the docking structure 7 implements liquid conduction, heat transfer between the refrigerating medium system of the vehicle 1000 and the battery 1 can be implemented. In this way, the temperature of the battery 1 can be adjusted by using the refrigerating medium system to improve the operation reliability and safety of the battery 1, or the waste heat of the battery 1 can be absorbed by using the refrigerating medium system to meet the heat source requirement of the heat-pump air-conditioning system of the vehicle 1000, and details are omitted herein.

As shown in FIG. 17 and FIG. 18, the docking structure 7 is adapted to be disposed at an end of the first housing portion 51 close to the recess 10 in the second direction Z, allowing the docking structure 7 to be at least partially extended between two longitudinal beams 201 of the vehicle-bottom longitudinal beam 200. Therefore, a height of the docking structure 7 at the vehicle end can be improved, so that the docking structure is not prone to being bumped by foreign matters or soaked in water during operation of the vehicle, and safety can be improved.

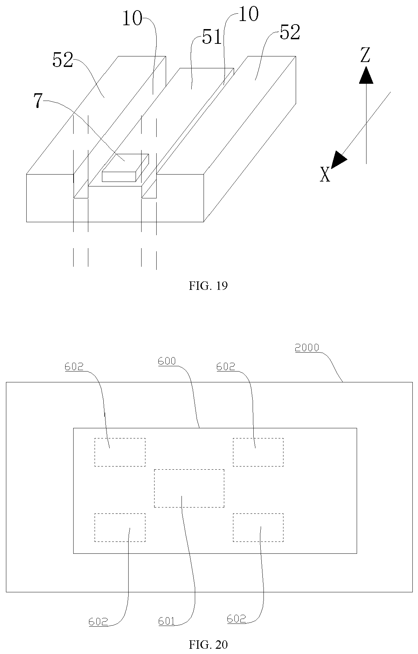

Alternatively, as shown in FIG. 19, the first housing portion 51 has a docking structure 7 disposed at an end wall of the first housing portion 51 perpendicular to the second direction Z and close to the recess 10. The docking structure 7 is adapted to dock in the first direction X or in the second direction Z, and the docking structure 7 is configured to dock with the vehicle to allow for current conduction and/or liquid conduction. In these embodiments, the docking structure 7 can be arranged in a space of the first housing portion 51 facing towards one side of the vehicle-bottom longitudinal beam 200, and a docking structure of the vehicle end can be correspondingly arranged, so that the docking of the battery 1 and the vehicle 1000 can be provided between the vehicle body and the battery housing 5 without being exposed, which may enhance the protection for the docking structure 7 and improve safety.

In the foregoing embodiment, since the battery 1 includes the docking structure 7, the current conduction with the vehicle 1000 or liquid conduction with the vehicle 1000 or simultaneously current conduction and liquid conduction with the vehicle 1000 can be implemented. For example, when the docking structure 7 implements current conduction, the current transmission between the vehicle 1000 and the battery 1 can be implemented, to implement power supply for the vehicle 1000 by the battery 1, the control of the vehicle 1000 to the battery 1, and the like. For example, when the docking structure 7 implements liquid conduction, heat transfer between the refrigerating medium system of the vehicle 1000 and the battery 1 can be implemented. In this way, the temperature of the battery 1 can be adjusted by using the refrigerating medium system to improve the operation reliability and safety of the battery 1, or the waste heat of the battery 1 can be absorbed by using the refrigerating medium system to meet the heat source requirement of the heat-pump air-conditioning system of the vehicle 1000, and details are omitted herein.

The above is an example for two forms of the recess 10, but the present disclosure is not limited thereto. The following describes other optional embodiments of the battery 1 according to the embodiments of the present disclosure. Subsequent optional embodiments may be applied to the above first embodiment and the above second embodiment, but it is not limited to the embodiments in the above two aspects.

In some embodiments, as shown in FIG. 4 and FIG. 8, a mounting structure 6 is disposed on the housing 5 and is configured to detachably mount the battery 1 to the vehicle 1000.

It should be noted that a manner where the mounting structure 6 is disposed on the housing 5 is not limited. The mounting structure 6 and the housing 5 may be integrally formed; or the mounting structure 6 and the housing 5 may be formed separately, and the mounting structure 6 may be directly or indirectly mounted on the housing 5. A position where the mounting structure 6 is disposed on the housing 5 is not limited. For example, the mounting structure 6 may be disposed on the first housing portion 51 or the second housing portion 52. For example, the mounting structure 6 may be disposed at a top of the second housing portion 52, a bottom of the second housing portion 52, a side part of the second housing portion 52 facing towards the recess 10, and the like.

In addition, it should be noted that a connection position of the mounting structure 6 and the vehicle 1000 is not limited. For example, the mounting structure 6 may be connected onto the vehicle-bottom longitudinal beam 200, like to at least one of the top, the bottom, and the side part of the vehicle-bottom longitudinal beam 200. For another example, the mounting structure 6 may be connected to other positions outside the vehicle-bottom longitudinal beam 200.

In the above embodiment, since the mounting structure 6 is configured to detachably mount the battery 1 to the vehicle 1000, so that the battery 1 is detachable relative to the vehicle 1000, thereby meeting the requirements for replacement, charging, maintenance, and the like of the battery 1.

The battery in the related art has no mounting structure. When such a battery is mounted to the vehicle, the battery needs to be loaded into a battery swapping frame containing the battery first, and then the battery swapping frame is locked to the vehicle. Because of the introduction of the battery swapping frame, the required mounting space is made large, and a volume energy density of the battery is difficult to improve in a case where a space of the vehicle bottom is limited.

With the battery 1 according to the embodiments of the present disclosure, the mounting structure 6 is disposed on the housing 5 of the battery 1 and is detachably connected to the vehicle 1000, so that the battery 1 can be mounted to the vehicle 1000 by using the mounting structure 6, to realize the mounting of the battery 1 to the vehicle 1000. Therefore, a battery swapping frame used for accommodating the battery in the related art is omitted, and a mounting space proportion of the battery swapping frame is reduced. Further, the volume energy density of the battery 1 can be increased. Moreover, since the battery swapping frame is omitted, the cost can be reduced, a load of the whole vehicle can be reduced, and battery swapping efficiency can be improved.

In addition, because the battery in the related art is mounted by using the battery swapping frame, in order to ensure the energy density of the battery, a height of the battery swapping frame above the ground is low. When the ground has a protrusion, the battery swapping frame is easily bumped, resulting in damage to the battery. For the battery 1 according to the embodiments of the present disclosure, since the battery swapping frame is omitted, a height of a lower part of the battery 1 above the ground is increased, which lowers the risk of hitting and injuring the battery 1 due to the protrusion on the ground, and improves the use safety and service life of the battery 1.

Moreover, since the battery swapping frame is omitted, a space of the battery 1 above the ground can be increased, which is beneficial to battery swapping operation. In some cases, the battery swapping station 2000 does not need to be trenched, and the vehicle 1000 does not need to be lifted, so that battery swapping can be realized. In short, whole vehicle lifting or trench digging requirement can be cancelled, so that a site arrangement of the battery swapping station 2000 can be simplified, and the space utilization rate is increased. Moreover, design requirements of a matched battery-swapping transport vehicle for battery swapping for volume and load-bearing of the battery are lowered, making the design of the battery-swapping transport vehicle less difficult and less costly.

In some embodiments, the mounting structure 6 includes a plurality of sub-mounting portions 61. At least part of the plurality of sub-mounting portions 61 is located in the recess 10. Specifically, a specific position of the sub-mounting portion 61 in the recess 10 is not limited, and the recess 10 may be, but is not limited to, the recess 10 in the first embodiment or the second embodiment described above.

Since the plurality of sub-mounting portions 61 are provided, it is beneficial to an improvement in mounting reliability of the battery 1. Since at least part of the plurality of sub-mounting portions 61 is located in the recess 10 and sandwiched between the recess 10 and the vehicle-bottom longitudinal beam 200, at least part of the sub-mounting portions 61 can obtain the protection from the recess 10, to avoid being bumped and damaged, thereby improving the mounting reliability of the battery 1. Moreover, during the operation of the vehicle 1000, the occurrence of a problem that the at least part of the sub-mounting portions 61 cannot be detached and replaced and the like due to corrosion on the at least part of the sub-mounting portions 61 by splashed muddy water can be prevented.

For example, in some embodiments, at least part of the plurality of sub-mounting portions 61 is located at a bottom wall 10a of the recess 10. For another example, in some embodiments, at least part of the plurality of sub-mounting portions 61 is located at a side wall 10b of the recess 10. For another example, in some embodiments, the at least part of the plurality of sub-mounting portions 61 is located at the bottom wall 10a of the recess 10, the at least part of the plurality of sub-mounting portions 61 is located at the side wall 10b of the recess 10 simultaneously.

Specifically, when the battery 1 is mounted in the vehicle 1000 for use, the bottom surface of the vehicle-bottom longitudinal beam 200 faces towards the bottom wall 10a of the recess 10, and an outer side surface and/or an inner side surface of the vehicle-bottom longitudinal beam 200 are arranged facing towards the side wall 10b of the recess 10. For example, in the above first embodiment, the side wall 10b of the recess 10 is defined by the first housing portion 51. In the above second embodiment, the side wall 10b of the recess 10 is defined by each of the first housing portion 51 and the second housing 52.

When the sub-mounting portion 61 is disposed at the side wall 10b of the recess 10, the sub-mounting portion 61 may be sandwiched between the side wall 10b of the recess 10 and a side wall of the vehicle-bottom longitudinal beam 200. Therefore, the sub-mounting portion 61 is arranged in the space in the recess 10, so that the sub-mounting portion 61 can obtain the protection from the recess 10 to prevent itself from being bumped and damaged, improving the mounting reliability of the battery 1. Moreover, since the sub-mounting portion 61 is sandwiched between the side wall 10b of the recess 10 and the side wall of the vehicle-bottom longitudinal beam 200, during the operation of the vehicle 1000, the occurrence of the problem that the sub-mounting portion 61 cannot be detached and replaced and the like due to the corrosion on the sub-mounting portion 61 by splashed muddy water can be prevented.

In addition, in the related art, when the battery is mounted by using the battery swapping frame, a plurality of locking-attachment structures is arranged at a frame outer peripheral position of the battery swapping frame, i.e., the locking-attachment structure is located at a side of the battery away from the vehicle-bottom longitudinal beam and bears a great torque, and the mounting reliability of the battery is low. With the battery 1 according to the embodiments of the present disclosure, since the sub-mounting portion 61 is disposed at the side wall of the recess 10, the sub-mounting portion 61 is adapted to be sandwiched between the side wall 10b of the recess 10 and the side wall of the vehicle-bottom longitudinal beam 200, i.e., the sub-mounting portion 61 is located at a side of the battery 1 close to the vehicle-bottom longitudinal beam 200 and bears a small torque, and the mounting reliability of the battery 1 is high.

In addition, in the related art, the locking-attachment structure is located at the side of the battery away from the vehicle-bottom longitudinal beam, and a distance between locking-attachment structures at the two sides of the vehicle-bottom longitudinal beam is large, so it is difficult to ensure relative position precision of the plurality of locking-attachment structures. During the battery replacement, since the relative position precision of the plurality of locking-attachment structures is low, the plurality of locking-attachment structures are difficult to quickly and accurately implement respective alignment, such that battery swapping difficulty is high, and the battery swapping efficiency is low. With the battery 1 according to the embodiments of the present disclosure, since the sub-mounting portion 61 may be disposed at a position of the battery 1 close to the vehicle-bottom longitudinal beam 200, a distance between the sub-mounting portions 61 on the two second housing portions 52 is short when the two second housing portions 52 are each provided with the sub-mounting portions 61, so that the relative position precision of the sub-mounting portions 61 at the two sides of the vehicle-bottom longitudinal beam 200 can be easily improved, lowering processing difficulty. Moreover, during the replacement of the battery 1, since relative position precision of the sub-mounting portions 61 of the two second housing portions 52 are high, the sub-mounting portions 61 at the two sides can easily implement respective alignment, thereby lowering the battery swapping difficulty and improving the battery swapping efficiency.

In addition, the sub-mounting portion 61 is disposed at the side wall 10b of the recess 10, which can prevent the sub-mounting portion 61 from occupying a space in the height direction, increase the height of the battery 1 above the ground and ensure an enough space reserved between the bottom of the battery 1 and the ground for the battery swapping operation. Moreover, because of an increase in the height of the battery 1 above the ground, the risk of hitting and scratching the bottom of the battery 1 due to the protrusions of the ground and the like can be reduced, and the use safety and the service life of the battery 1 are improved.

Moreover, since the sub-mounting portion 61 is disposed at the side wall 10b of the recess 10, a force applied to the battery 1 at the sub-mounting portion 61 may approach a shear stress. The force applied to the battery 1 at the sub-mounting portion 61 is a tensile stress basically. Therefore, the mounting reliability of the battery 1 can be improved when the sub-mounting portion 61 is disposed at the side wall 10b of the recess 10.

When the sub-mounting portion 61 is disposed at the bottom wall 10a of the recess 10, the space occupied by the sub-mounting portion 61 in the horizontal direction can be saved, and the space utilization rate of the battery 1 in the horizontal direction is improved.

Certainly, the present disclosure is not limited thereto. In other embodiments of the present disclosure, when the mounting structure 6 includes the plurality of sub-mounting portions 61, at least part of the plurality of sub-mounting portions 61 is located outside the recess 10. Therefore, the sub-mounting portion 61 located outside the recess 10 may not be limited by the space in the recess 10, and can be flexibly designed from its structure and position.

For example, in some embodiments, at least one sub-mounting portion 61 located outside the recess 10 may be located at an end wall of the second housing portion 52 close to the recess 10 in the second direction Z, i.e., the sub-mounting portion 61 may be disposed at a top wall of the second housing portion 52, thereby ensuring a high position of the sub-mounting portion 61, which is beneficial to a protection on the sub-mounting portion and improves the connection reliability of the battery 1.

For example, in some embodiments, when the recess 10 is in the form of the above second embodiment, at least part of the plurality of sub-mounting portions 61 may be located at an end wall of the first housing portion 51 close to the recess 10 in the second direction Z. That is, the sub-mounting portion 61 may be disposed at the top wall of the first housing portion 51, to ensure the high position of the sub-mounting portion 61, which is beneficial to the protection on the sub-mounting portion 61 and improves the connection reliability of the battery 1.

For example, in some embodiments, the at least one sub-mounting portion 61 located outside the recess 10 may be located on a surface of the second housing portion 52 facing away from the first housing portion 51, i.e., the sub-mounting portion 61 may be disposed at a transversely outer side surface of the second housing portion 52. Therefore, it is convenient to observe whether the sub-mounting portion 61 is mounted in place, and the processing of the sub-mounting portion 61 is facilitated.

In some embodiments, several ones of the plurality of sub-mounting portions 61 are located at a surface of the housing 5 parallel to the first direction X and are arranged at intervals in the first direction X. Therefore, it is beneficial to an improvement in dispersity and uniformity of stress distribution, to an improvement in a stress concentration problem of the sub-mounting portion 61, to an improvement in connection reliability of each sub-mounting portion 61, and a further improvement in the mounting stability and reliability of the battery 1. In addition, when the battery 1 is vertically supported upwards, during realization of a connection between the plurality of sub-mounting portions 61 and the vehicle 1000, the plurality of sub-mounting portions 61 do not interfere with each other, which can realize flexible and diverse design for the structure of the sub-mounting portion 61.

In some embodiments, at least part of the plurality of sub-mounting portions 61 is located at a surface of the housing 5 perpendicular to the first direction X. For example, at least one sub-mounting portion 61 is arranged at each of two longitudinal end surfaces of the housing 5, respectively. Therefore, a space occupied in the transverse direction can be reduced, and a space utilization rate of the battery 1 in the transverse direction can be improved.

In some embodiments, several ones of the plurality of sub-mounting portions 61 are located at the surface of the housing 5 perpendicular to the first direction X and are arranged at intervals in a direction where the first housing portion 51 and the two second housing portions 52 are parallel to each other. Therefore, the space can be fully utilized, the stress of the sub-mounting portion 61 is dispersed, and the connection reliability of the battery 1 is improved.

In some embodiments, when the docking structure 7 is disposed at the top wall of the first housing portion 51, and when the mounting structure 6 is disposed at a side wall of the second housing portion 52 facing towards the recess 10, the docking structure 7 and the mounting structure 6 are located at different side surfaces of the housing 5. Therefore, the docking structure 7 and the mounting structure 6 can be arranged at different spatial positions of the housing 5 to avoid mutual interference, and a larger number of docking structures 7 or mounting structures 6 can be arranged, so that the docking structure 7 can flexibly select an arrangement position as desired, and the mounting structure 6 may also flexibly select an arrangement position as desired, thereby ensuring respective functional requirements of the docking structure 7 and the mounting structure 6.

It should be noted that there is no limit to which side wall of the second housing portion 52 facing towards the recess 10 the mounting structure 6 is specifically disposed on. For example, in some optional examples, the mounting structure 6 may be located at each of two transverse side walls 10b of the recess 10 or located at only one of the two transverse side walls 10b of the recess 10.

In some embodiments, the docking structure 7 may be fixed relative to the housing 5 or may be adjustable relative to the housing 5. Therefore, by adjusting the position of the docking structure 7, for different docking positions of the vehicle 1000 or different vehicles 1000, docking can be performed, with high universality and wide application range.

It should be noted that a solution where a position of the docking structure 7 is adjustable relative to the housing 5 is not limited. For example, the housing 5 has a plurality of first mounting positions, and the docking structure 7 may be selectively mounted to any one of the first mounting positions. For another example, the housing 5 is provided with a first adjustment mechanism, and the docking structure 7 is mounted on the first adjustment mechanism. The position of the docking structure 7 may be movably adjusted when driven by the first adjustment mechanism.

In some embodiments, the mounting structure 6 may be fixed relative to the housing 5 or adjustable relative to the housing 5. Therefore, by adjusting the position of the mounting structure 6, for different mounting positions of the vehicle 1000 or different vehicles 1000, mounting can be performed with high universality and wide application range.

It should be noted that a solution where a position of the mounting structure 6 is adjustable relative to the housing 5 is not limited. For example, the housing 5 has a plurality of second mounting positions, and the mounting structure 6 may be selectively mounted to any one of the second mounting positions. For another example, the housing 5 is provided with a second adjustment mechanism, and the mounting structure 6 is mounted on the second adjustment mechanism. The position of the mounting structure 6 may be movably adjusted when driven by the second adjustment mechanism.

In some embodiments, the mounting structure 6 is detachably connected to the vehicle-bottom longitudinal beam 200. It should be noted that the connection manner of the mounting structure 6 and the vehicle-bottom longitudinal beam 200 is not limited. The mounting structure 6 may be directly connected to a part of the vehicle-bottom longitudinal beam 200 itself facing towards the mounting structure 6 or be indirectly connected to a connection structure 300 disposed on the vehicle-bottom longitudinal beam 200 facing towards the mounting structure 6. Therefore, since the mounting structure 6 is sandwiched between the second housing portion 52 and the side wall of the vehicle-bottom longitudinal beam 200 and is detachably connected to the vehicle-bottom longitudinal beam 200, the structure can be simplified, the connection is facilitated, and the space is saved.

In some embodiments, in the second direction Z, a maximum dimension of the mounting structure 6 is smaller than at least one of a maximum dimension of the first housing portion 51 and a maximum dimension of each of the two second housing portions 52. Therefore, the housing 5 is allowed to have a space for arranging the battery cell 4.

In some embodiments, as shown in FIG. 12, the battery cell 4 is accommodated in a part of the housing 5 that overlaps with a projection of the mounting structure 6 in the second direction Z. For example, the at least one battery cell 4 is located directly below the mounting structure 6, to form an orthographic projection in the vertical direction. An orthographic projection of the mounting structure 6 at least partially overlaps with the orthographic projection of the battery cell 4 below the mounting structure 6. Therefore, the space can be fully utilized to improve the energy density of the battery 1.

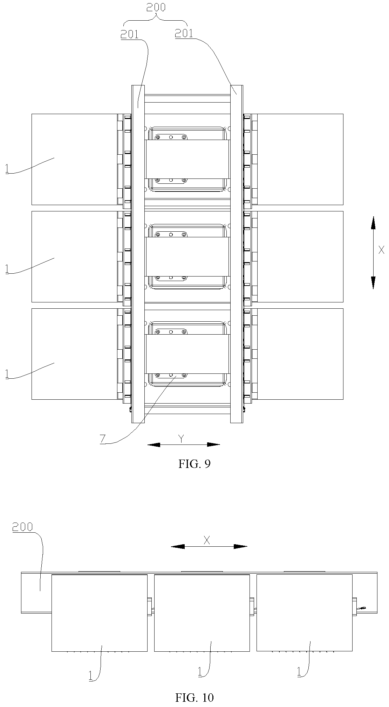

In some embodiments, as shown in FIG. 9 to FIG. 11, an unlocking position of the mounting structure 6 is disposed at a longitudinally outer side of the recess 10. For example, the unlocking position is located in front of an exterior of the recess 10 or behind the exterior of the recess 10. Thus, an unlocking operation, locking observation, and the like can be conveniently performed. Moreover, there is no need to punch a hole from the bottom of the battery 1 along the vertical direction, so that an unlocking member extends into the hole along the vertical direction to touch the mounting structure 6 inside the recess 10 for unlocking. In this way, the occupation of the space in the battery 1 caused by punching can be avoided, which ensures that the housing 5 can have the battery cell 4 at a position directly below the mounting structure 6 in the housing 5, and can further improve the energy density of the battery 1.

In some embodiments, as shown in FIG. 11 and FIG. 12, an inner cavity of the first housing portion 51 is divided into a first cavity portion 511 and two second cavity portions 512 located at two sides of the first cavity portion 511. The two second cavity portions 512 are located directly below the mounting structures 6 at the two sides, respectively. A cavity height H31 of the first cavity portion 511 is the same as a cavity height H32 of the second cavity portion 512, i.e., the cavity height H31 used for accommodating the battery cell 4 in the first cavity portion 511 is the same as the cavity height H32 used for accommodating the battery cell 4 in the second cavity portion 512.

Therefore, a part of several battery cells 4 can be disposed in the first cavity portion 511 as needed, and the remaining parts of several battery cells 4 are disposed in the second cavity portion 512, so that the housing 5 has the battery cell 4 at the position directly below the mounting structure 6 in the housing 5, thereby making full use of the space in the housing 5 to arrange a greater number of battery cells 4, and improving the energy density of the battery 1.

Certainly, the present disclosure is not limited thereto. In other embodiments of the present disclosure, even if the cavity height of the first cavity portion 511 is the same as the cavity height of the second cavity portion 512, it can also be that no battery cell 4 is disposed in the second cavity portion 512. For example, the temperature adjustment member 8 or a collection device of the battery cell 4 may be disposed at the position of the second cavity portion 512, to fully utilize this part of space.

In some embodiments, the housing 5 has a mounting groove disposed at an outer surface of the housing 5. The mounting groove is configured for an arrangement of the mounting structure 6. Therefore, by arranging the mounting structure 6 in the mounting groove, the mounting structure 6 can be protected to improve the reliability of the connection.

In some embodiments, as shown in FIG. 4, the top wall of the first housing portion 51 is lower than the mounting structure 6. In this way, the mounting structure 6 can be prevented from being located in a gap between a side part of the first housing portion 51 and a side part of the second housing portion 52, thereby ensuring a sufficient space arrangement of the mounting structure 6 and facilitating processing and design of the mounting structure 6. Moreover, the mounting and dismounting of the mounting structure 6 and the vehicle 1000 are facilitated, thereby lowering the alignment precision requirement.

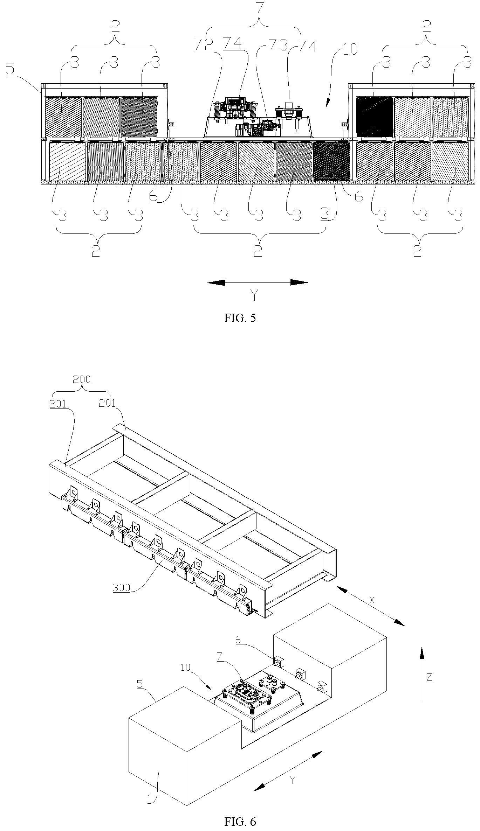

In some embodiments, as shown in FIG. 4 and FIG. 5, a top wall at a part of the first housing portion 51 that is connected to the second housing portion 52 is flush with a top wall at a part of the first housing portion 51 that accommodates the battery cell 4.

Therefore, a part of several battery cells 4 can be extended below a part of the first housing portion 51 that is connected to the second housing portion 52 as needed, so that the battery cell 4 is arranged at the position directly below the mounting structure 6 in the housing 5. In this way, the space in the housing 5 is fully utilized to arrange a larger number of battery cells 4, and the energy density of the battery 1 is improved.

For example, optionally, as shown in FIG. 3 and FIG. 4, the top wall of the first housing portion 51 is planar as a whole, thereby facilitating processing and design.

In some embodiments, a bottom wall of the first housing portion 51 is flush with a bottom wall of the second housing portion 52. Since the top wall of the second housing portion 52 is higher than the top wall of the first housing portion 51, it can be easily ensured that a height of an accommodation cavity of the battery 1 in the second housing portion 52 is greater than a height of an accommodation cavity of the battery 1 in the first housing portion 51, and processing is facilitated, to ensure that an overall height of the battery 1 above the ground is the same.

In some embodiments, a dimension L1 of the battery 1 in the first direction X is smaller than a dimension L2 of the battery 1 in a third direction Y. The first housing portion 51 and the two second housing portions 52 are parallel to each other in the third direction Y.

That is, a transverse dimension L2 of the battery 1 is large, while a longitudinal dimension L1 of the battery 1 is small. When the transverse dimension L2 of the battery 1 cannot exceed a transverse width of the vehicle 1000, the longitudinal dimension L1 of the battery 1 can be ensured not to be too large, and a volume of the battery 1 is small. Since the dimension of the single battery 1 is small, deformation of the battery 1 can be reduced, which is beneficial to an improvement in an assembly success rate of the battery 1.

Moreover, a number of the sub-mounting portions 61 on each second housing portion 52 may be reduced correspondingly. For example, two or three sub-mounting portions 61 can be provided on each second housing portion 52, so that the stress of each sub-mounting portion 61 can be better reduced, to ensure the mounting reliability of the battery 1. Moreover, the relative position precision of the plurality of sub-mounting portions 61 can be easily controlled, and alignment and mounting of each sub-mounting portion 61 and the vehicle 1000 can be easily achieved, thereby lowering the mounting difficulty and improving the mounting efficiency.

In some embodiments, as shown in FIG. 4 and FIG. 8, an end wall of each of the two second housing portions 52 adapted to face towards the vehicle-bottom longitudinal beam 200 in the second direction Z is closer to an end wall of each of the two second housing portions 52 adapted to face away from the vehicle-bottom longitudinal beam 200 in the second direction Z than an end surface of the vehicle-bottom longitudinal beam 200 adapted to face away from the battery 1 in the second direction Z, i.e., an upper end wall of the second housing portion 52 is lower than an upper end wall of the vehicle-bottom longitudinal beam 200, so that the top of the battery 1 can be prevented from being bumped, and a space on the vehicle-bottom longitudinal beam 200 for storing goods or other structures can be prevented from being affected. Moreover, when the end wall of the first housing portion 51 facing towards the recess 10 is lower than the vehicle-bottom longitudinal beam 200, the space on the vehicle-bottom longitudinal beam 200 for storing goods or other structures can be better prevented from being affected.

In some embodiments, as shown in FIG. 4 and FIG. 8, a height difference H2 between a top wall of the first housing portion 51 and a top wall of the second housing portion 52 in the second direction Z is smaller than or equal to 100 mm. Therefore, by defining the height difference H2, a sufficient space is reserved above the top wall of the first housing portion 51 to avoid the vehicle-bottom longitudinal beam 200. In this way, on the one hand, the second housing portion 52 can fully utilize the space at two sides of the vehicle-bottom longitudinal beam 200 to improve the energy density of the battery 1 and/or increase the height of the battery 1 above the ground. On the other hand, when the docking structure 7 is disposed at the top wall of the first housing portion 51, a sufficient space can be formed above the first housing portion 51 for providing the docking structure 7.

In some embodiments, a top wall of the second housing portion 52 is adapted to be higher than a height center of the vehicle-bottom longitudinal beam 200. Therefore, the spaces at the two side of the vehicle-bottom longitudinal beam 200 can be fully utilized for providing the battery cell 4, to improve the energy density of the battery 1.

In some embodiments, a top surface of the battery cell 4 (i.e., a top surface of the highest battery cell 4 in the second housing portion 52) accommodated in the second housing portion 52 is adapted to be higher than a height center of the vehicle-bottom longitudinal beam 200. Therefore, the spaces at the two side of the vehicle-bottom longitudinal beam 200 can be fully utilized for providing the battery cell 4, to improve the energy density of the battery 1.

In some embodiments, as shown in FIG. 4 and FIG. 12, a total height H4 of the battery cells 4 accommodated in the second housing portion 52 is greater than a total height H3 of the battery cells 4 accommodated in the first housing portion 51.

In the above embodiment, since the top wall of the second housing portion 52 is higher than the top wall of the first housing portion 51, it can be more easily realized that the height of the accommodation cavity of the battery 1 in the second housing portion 52 is greater than the height of the accommodation cavity of the battery 1 in the first housing portion 51. In this way, it can be realized that the total height of the battery cells 4 accommodated in the second housing portion 52 is greater than the total height of the battery cells 4 accommodated in the first housing portion 51, such that the distribution of the battery cells 4 can make full use of the space in the housing 5, which is beneficial to the improvement of the energy density of the battery 1 or the increase of the height of the battery 1 above the ground.

In some embodiments, a plurality of battery cells 4 is disposed in the housing 5. The plurality of battery cells 4 include electrode terminals having one orientation. Therefore, the assembly efficiency can be improved.

In some embodiments, a plurality of battery cells 4 is disposed in the housing 5. The plurality of battery cells 4 includes electrode terminals, and electrode terminals of at least two battery cells 4 of the plurality of battery cells 4 have different orientations. Thus, a flexible arrangement can be achieved.

For example, orientations of electrode terminals of the battery cells 4 in the first housing portion 51 are different from orientations of electrode terminals of the battery cells 4 in the two second housing portions 52.

In some embodiments, a plurality of battery cells 4 is arranged in the first housing portion 51, which can fully utilize the space and improve the energy density of the battery 1. It should be noted that the plurality of battery cells 4 in the first housing portion 51 may be arranged in groups or arranged separately without grouping. When the plurality of battery cells 4 are arranged in groups, the plurality of battery cells 4 may be provided in one or more groups.

In some examples, placement manners of all the battery cells 4 in the first housing portion 51 are the same. In other words, each battery cell 4 in the first housing portion 51 has a same length direction, width direction, and thickness direction.

For example, the length direction of each battery cell 4 in the first housing portion 51 is longitudinal, the width direction thereof is transverse, and the thickness direction thereof is vertical; or, for another example, the length direction of each battery cell 4 in the first housing portion 51 is longitudinal, the width direction thereof is vertical, and the thickness direction thereof is transverse; or, for another example, the length direction of each battery cell 4 in the first housing portion 51 is transverse, the width direction thereof is longitudinal, and the thickness direction thereof is vertical. Since there are many arrangement solutions, examples are omitted herein.

Alternatively, in some other examples, the placement manners of the at least two battery cells 4 in the first housing portion 51 are different, i.e., at least ones of the length directions, the width directions, and the thickness directions of the at least two battery cells 4 in the first housing portion 51 are different.

For example, length directions of several battery cells 4 in the first housing portion 51 are longitudinal, width directions thereof are transverse, and thickness directions thereof are vertical. Meanwhile, the first housing portion 51 also has several battery cells 4 having the length directions as transverse direction, the width directions as longitudinal direction, and the thickness directions as vertical direction. Since there are many arrangement solutions, examples are omitted herein.

Therefore, flexible design of the battery cells 4 in the first housing portion 51 can be achieved, and different actual requirements are satisfied.

In some embodiments, a plurality of battery cells 4 are disposed in the second housing portion 52, so that the space can be fully utilized to improve the energy density of the battery 1. It should be noted that the plurality of battery cells 4 in the second housing portion 52 may be arranged in groups or arranged separately without grouping. The plurality of battery cells 4 may be arranged in one or more groups when arranged in groups.

In some examples, placement manners of all the battery cells 4 in the second housing portion 52 are the same. In other words, each battery cell 4 in the second housing portion 52 has a same length direction, width direction, and thickness direction.

For example, the length direction of each battery cell 4 in the second housing portion 52 is longitudinal, the width direction thereof is transverse, and the thickness direction thereof is vertical; or, for another example, the length direction of each battery cell 4 in the second housing portion 52 is longitudinal, the width direction thereof is vertical, and the thickness direction thereof is transverse; or, for another example, the length direction of each battery cell 4 in the second housing portion 52 is transverse, the width direction thereof is longitudinal, and the thickness direction thereof is vertical. Since there are many arrangement solutions, examples are omitted herein.

Alternatively, in some other examples, the placement manners of the at least two battery cells 4 in the second housing portion 52 are different, i.e., at least ones of the length directions, the width directions, and the thickness directions of the at least two battery cells 4 in the second housing portion 52 are different.

For example, length directions of several battery cells 4 in the second housing portion 52 are longitudinal, width directions thereof are transverse, and thickness directions thereof are vertical. Meanwhile, the second housing portion 52 also has several battery cells 4 having the length directions as transverse direction, the width directions as longitudinal direction, and the thickness directions as vertical direction. Since there are many arrangement solutions, examples are omitted herein.

Therefore, flexible design of the battery cells 4 in the second housing portion 52 can be achieved, and different actual requirements are satisfied.

In some embodiments, a part of the at least one battery cell 4 is located in the first housing portion 51, and the remaining part of the at least one battery cell 4 is located in the second housing portion 52. In other words, the at least one battery cell 4 is not completely disposed in the first housing portion 51, nor is it completely disposed in the second housing portion 52, but is partially located in the first housing portion 51, and the remaining part of the at least one battery cell 4 is located in the second housing portion 52. Therefore, the space at the connection between the first housing portion 51 and the second housing portion 52 can be fully utilized, to improve the space utilization rate and increase the energy density of the battery 1.

Of course, the present disclosure is not limited thereto. For example, in other embodiments, it is also impossible that a part of any battery cell 4 is located in the first housing portion 51, and the remaining part of any battery cell 4 is located in the second housing portion 52, i.e., the space at the connection between the first housing portion 51 and the second housing portion 52 is not utilized by the battery cell 4. Therefore, without the need for considering a communication problem between the first housing portion 51 and the second housing portion 52, the first housing portion 51 and the second housing portion 52 are formed separately, which is beneficial to a modular combination arrangement of the housing 5.

In some embodiments, at least one layer of battery cells 4 along a height direction of the battery 1 (like the second direction Z) are arranged in each of the first housing portion 51 and the two second housing portions 52. At this time, battery cells 4 in each layer forms a battery layer 2, and the battery cells 4 are not arranged in groups. Therefore, by arranging the battery cells 4 in layers, an improvement in assembly efficiency of the battery 1 can be facilitated, and simplification on an electrical connection and the like is beneficial. Moreover, since the first housing portion 51 and the second housing portion 52 are respectively provided with at least one layer of battery cells 4 along the height direction of the battery 1, it is possible to simply and effectively ensure that the total height of the battery cells 4 accommodated in the second housing portion 52 is greater than the total height of the battery cells 4 accommodated in the first housing portion 51 by controlling parameters such as the number of layers or a layer height or combining battery layers 2 with different layer heights, thereby facilitating the full utilization of the space and improving the energy density of the battery 1. In addition, since the plurality of battery cells 4 are not arranged in groups, fixing plates and the like used for grouping can be reduced, thereby saving space occupation and improving the energy density of the battery 1.

In some embodiments, along the height direction of the battery 1, a number of layers of battery cells 4 arranged in the first housing portion 51 is smaller than or equal to a number of layers of battery cells 4 arranged in each of the two second housing portions 52. A number of layers of battery layers 2 arranged in the second housing portion 52 is greater than a number of layers of battery layers 2 arranged in the first housing portion 51.

Therefore, when the height of each battery layer 2 in the second housing portion 52 is the same as or close to the height of each battery layer 2 in the first housing portion 51, it can be easily realized that the total height of the battery cells 4 accommodated in the second housing portion 52 is greater than the total height of the battery cells 4 accommodated in the first housing portion 51 by controlling the number of layers. Therefore, it is beneficial to the full utilization of the space, and the energy density of the battery 1 is improved.

In some embodiments, a dimension of battery cells 4 in a single layer in the first housing portion 51 along the height direction of the battery 1 is the same as a dimension of battery cells 4 in a single layer in each of the two second housing portions 52 along the height direction of the battery 1. Therefore, since the height of each battery layer 2 in the second housing portion 52 is the same as the height of each battery layer 2 in the first housing portion 51, it can be easily realized that the total height of the battery cells 4 accommodated in the second housing portion 52 is greater than the total height of the battery cells 4 accommodated in the first housing portion 51 by controlling the number of layers. Moreover, it is beneficial to the realization of position exchange of the battery cells 4 and a reduction in the assembly difficulty.

In some embodiments, a dimension of battery cells 4 in a single layer in the first housing portion 51 along the height direction of the battery 1 is smaller than a dimension of battery cells 4 in a single layer in each of the two second housing portions 52 along the height direction of the battery 1. Therefore, it can be easily realized that the total height of the battery cells 4 accommodated in the second housing portion 52 is greater than the total height of the battery cells 4 accommodated in the first housing portion 51 by controlling the number of layers. Moreover, it is beneficial to the sufficient utilization of space and the improvement of the energy density of the battery 1.

In some embodiments, at least one layer of battery modules 3 along a height direction of the battery 1 are arranged in each of the first housing portion 51 and the two second housing portions 52. Each of the battery modules 3 includes a plurality of battery cells 4 arranged in a direction perpendicular to the height direction of the battery 1 (like the second direction Z). In this case, battery cells 4 in each layer forms a battery layer 2, and the battery cells 4 are arranged in groups.

For example, the plurality of battery modules 3 are arranged regularly with equal height in the horizontal direction to form the battery layer 2. For example, the plurality of battery modules 3 are sequentially arranged in the transverse direction, or the plurality of battery modules 3 are sequentially arranged in the longitudinal direction, or the plurality of battery modules 3 are arranged in a plurality of rows and columns along the transverse direction and the longitudinal direction. In addition, the plurality of battery modules 3 may be connected in series, in parallel, or in series and parallel.

Therefore, by arranging the battery cells 4 in groups, the improvement of the assembly efficiency of the battery 1 can be facilitated, and the simplification on the electrical connection is beneficial. Moreover, since one battery layer 2 or a plurality of battery layers 2, which are arranged vertically, are provided in the first housing portion 51, and one battery layer 2 or a plurality of battery layers 2, which are arranged vertically, are provided in the second housing portion 52, it is possible to simply and effectively ensure that the total height of the battery cells 4 accommodated in the second housing portion 52 is greater than the total height of the battery cells 4 accommodated in the first housing portion 51 by controlling parameters such as the number of layers or layer heights or combining the battery layers 2 with different layer heights, thereby facilitating the full utilization of the space and improving the energy density of the battery 1.

In some embodiments, along the height direction of the battery 1, a number of layers of battery modules 3 arranged in the first housing portion 51 is smaller than or equal to a number of layers of battery modules 3 arranged in each of the two second housing portions 52. As shown in FIG. 3 to FIG. 5, the number of layers of the battery layers 2 in the second housing portion 52 is greater than the number of layers of the battery layers 2 in the first housing portion 51.

Therefore, when the height of each battery layer 2 in the second housing portion 52 is the same as or close to the height of each battery layer 2 in the first housing portion 51, it can be easily realized that the total height of the battery cells 4 accommodated in the second housing portion 52 is greater than the total height of the battery cells 4 accommodated in the first housing portion 51 by controlling the number of layers, which is beneficial to the full utilization of the space and the improvement of the energy density of the battery 1.

In some embodiments, a dimension of battery modules 3 in a single layer in the first housing portion 51 along the height direction of the battery 1 is the same as a dimension of battery modules 3 in a single layer in each of the two second housing portions 52 along the height direction of the battery 1. Therefore, since the height of each battery layer 2 in the second housing portion 52 is the same as the height of each battery layer 2 in the first housing portion 51, it can be easily realized that the total height of the battery cells 4 accommodated in the second housing portion 52 is greater than the total height of the battery cells 4 accommodated in the first housing portion 51 by controlling the number of layers. Moreover, it is beneficial to realizing the position exchange of the battery modules 3 and reducing the assembly difficulty.

In some embodiments, a dimension of battery modules 3 in a single layer in the first housing portion 51 along the height direction of the battery 1 is smaller than a dimension of battery modules 3 in a single layer in each of the two second housing portions 52 along the height direction of the battery 1. Therefore, by controlling the number of layers, it can be easily realized that the total height of the battery cells 4 accommodated in the second housing portion 52 is greater than the total height of the battery cells 4 accommodated in the first housing portion 51, which is beneficial to the full utilization of the space and the improvement of the energy density of the battery 1.

Specifically, the height of the battery layer 2 refers to a vertical dimension of the battery layer 2, and is determined according to a placement manner of the battery cell 4/the battery module 3 included in the battery layer 2. For example, when a length direction of the battery cell 4/battery module 3 is provided in the vertical direction, a length of the battery cell 4/battery module 3 is the height of the battery layer 2. For another example, when a thickness direction of the battery cell 4/battery module 3 is provided in the vertical direction, a thickness of the battery cell 4/battery module 3 is the height of the battery layer 2. For another example, when a width direction of the battery cell 4/battery module 3 is provided in the vertical direction, a width of the battery cell 4/battery module 3 is the height of the battery layer 2.

When the heights of the two battery layers 2 are different, there may be a plurality of manners. For example, it can be that the battery cells 4/battery modules 3 included in the two battery layers 2 have a same placement manner but different specifications. For example, the two battery cells 4/battery modules 3 have length directions each as longitudinal direction, width directions each as transverse direction, and thickness directions each as vertical, but have different thickness dimensions. For another example, it can be that the battery cells 4/battery modules 3 included in the two battery layers 2 have different placement manners but a same specification. For example, the two battery cells 4/battery modules 3 have the same length dimension, width dimension, and height dimension, but a length of one of the two battery cells 4/battery modules 3 is vertical, and a thickness of the other one of the two battery cells 4/battery modules 3 is vertical, and the like.

For example, in some specific examples, as shown in FIG. 3 to FIG. 5, there are one battery layer 2 in the first housing portion 51 and two battery layers 2 in the second housing portion 52. A lower battery layer 2 in the second housing portion 52 has a same height as the battery layer 2 in the first housing portion 51 and is flush with the battery layer 2 in the first housing portion 51, and a height of an upper battery layer 2 in the second housing portion 52 is greater than or equal to the height of the lower battery layer 2 in the second housing portion 52.

In the above embodiment, the lower battery layer 2 in the second housing portion 52 has the same height as the battery layer 2 in the first housing portion 51 and is flush with the battery layer 2 in the first housing portion 51, which means that a bottom surface of the lower battery layer 2 in the second housing portion 52 is flush with a bottom surface of the battery layer 2 in the first housing portion 51, and a top surface of the lower battery layer 2 in the second housing portion 52 is flush with a top surface of the battery layer 2 in the first housing portion 51.

Therefore, the space in the housing 5 can be fully utilized to simplify the arrangement of the battery module 3. For example, compatibility and interchangeability and the like between a battery module 3 of the lower battery layer 2 in the second housing portion 52 and a battery module 3 of the battery layer 2 in the first housing portion 51 can be realized. Moreover, it can be effectively ensured that the total height of the battery cells 4 accommodated in the second housing portion 52 is greater than the total height of the battery cells 4 accommodated in the first housing portion 51. Therefore, it is beneficial to the sufficient utilization of the space and the improvement of the energy density of the battery 1. In addition, it can also be ensured that a distance of the battery 1 above the ground is sufficient, which is beneficial to battery swapping and that the battery 1 is protected from being bumped.

In some embodiments, a plurality of battery modules 3 is arranged in the housing 5, several ones of the plurality of battery modules 3 are arranged in parallel in the first direction X; and/or a plurality of battery modules 3 is arranged in the housing 5, several ones of the plurality of battery modules 3 are arranged in parallel in a third direction Y The first housing portion 51 and the two second housing portions 52 are arranged in the third direction Y. Therefore, a flexible arrangement can be achieved, and the space can be fully utilized.

In some embodiments, the plurality of battery layers 2 are disposed in the second housing portion 52, and arrangement directions of the plurality of battery modules 3 in at least two battery layers 2 are perpendicular. For example, a plurality of battery modules 3 in at least one battery layer 2 in the second housing portion 52 are sequentially arranged in the transverse direction, and a plurality of battery modules 3 in the at least one battery layer 2 in the second housing portion 52 are sequentially arranged in the longitudinal direction simultaneously.

Alternatively, in some other embodiments, the plurality of battery layers 2 are disposed in the second housing portion 52, and the arrangement directions of the plurality of battery modules 3 in each of the battery layers 2 are each the same. For example, the plurality of battery modules 3 in each of battery layers 2 in the second housing portion 52 are sequentially arranged in the transverse direction. For another example, the plurality of battery modules 3 in each of battery layers 2 in the second housing portion 52 are each sequentially arranged in the longitudinal direction.

Therefore, flexible arrangements of the battery modules 3 in the second housing portion 52 can be achieved, and different actual requirements are satisfied.

In some embodiments, one battery layer 2 is disposed in the first housing portion 51, and arrangement directions of the plurality of battery modules 3 in the battery layer 2 in the first housing portion 51 are the same as arrangement directions of the plurality of battery modules 3 in the at least one battery layer 2 in the second housing portion 52. For example, the plurality of battery modules 3 in the battery layer 2 in the first housing portion 51 are sequentially arranged in the transverse direction, and the plurality of battery modules 3 in the at least one battery layer 2 in the second housing 52 are also sequentially arranged in the transverse direction. For another example, the plurality of battery modules 3 in the battery layer 2 in the first housing portion 51 are sequentially arranged in the longitudinal direction, and the plurality of battery modules 3 in the at least one battery layer 2 in the second housing 52 are also sequentially arranged in the longitudinal direction.

Alternatively, in some other embodiments, one battery layer 2 is provided in the first housing portion 51, and the arrangement directions of the plurality of battery modules 3 in the battery layer 2 in the first housing portion 51 are perpendicular to the arrangement directions of the plurality of battery modules 3 in the at least one battery layer 2 in the second housing portion 52. For example, the plurality of battery modules 3 in the battery layer 2 in the first housing portion 51 are sequentially arranged in the transverse direction, and the plurality of battery modules 3 in the at least one battery layer 2 in the second housing portion 52 are sequentially arranged in the longitudinal direction. For another example, the plurality of battery modules 3 in the battery layer 2 in the first housing portion 51 are sequentially arranged in the longitudinal direction, and the plurality of battery modules 3 in the at least one battery layer 2 in the second housing portion 52 are sequentially arranged in the transverse direction.

Therefore, the flexible arrangements of the battery modules 3 in the first housing portion 51 and the second housing portion 52 can be realized, and different actual requirements are satisfied.

In some embodiments, the plurality of battery modules 3 in the at least one battery layer 2 are arranged in the longitudinal direction, and a length direction of each of the plurality of battery modules 3 in the at least one battery layer 2 extends in the transverse direction. Therefore, the space can be fully utilized, and the battery modules 3 are convenient to be arranged to form the battery layer 2.

In some embodiments, the plurality of battery modules 3 in the at least one battery layer 2 are arranged in the transverse direction, and the length direction of each of the plurality of battery modules 3 in the at least one battery layer 2 extends in the longitudinal direction. Therefore, the space can be fully utilized, and the battery modules 3 are convenient to be arranged to form the battery layer 2.

Therefore, the flexible design for the battery layer 2 can be achieved, and different actual requirements are satisfied.

In some embodiments, the plurality of battery cells 4 included in the at least one battery module 3 are arranged along one of the length direction, the width direction, and the thickness direction of the battery module 3.

For example, the plurality of battery cells 4 included in the at least one battery module 3 are arranged along the length direction of the battery module 3. For another example, the plurality of battery cells 4 included in the at least one battery module 3 are arranged along the width direction of the battery module 3. For another example, the plurality of battery cells 4 included in the at least one battery module 3 are arranged along the thickness direction of the battery module 3.

Therefore, the flexible design for the battery module 3 can be realized, and different actual requirements are satisfied.

In some embodiments, as shown in FIG. 3 and FIG. 13, the battery 1 includes at least one temperature adjustment member 8. The temperature adjustment member 8 is disposed in each of the first housing portion 51 and the second housing portion 52. Therefore, the battery cells 4 in the first housing portion 51 and the battery cells 4 in the second housing portion 52 can each obtain temperature adjustment, so that the battery 1 can operate at a proper temperature, to improve the operation reliability and the service life of the battery 1 and improve operation energy efficiency of the battery 1.

In some embodiments, as shown in FIG. 13, the at least one temperature adjustment member 8 includes a plurality of temperature adjustment members 8. The plurality of temperature adjustment members 8 is disposed in the first housing portion 51 and the two second housing portions 52, respectively. Therefore, adjustment on a temperature of the battery cell 4 can be realized, so that the battery 1 can operate at a suitable temperature, which improves the operation reliability and the service life of the battery 1 and improves the operation energy efficiency of the battery 1.

For example, the temperature adjustment member 8 includes at least one of a first adjustment plate 81, a second adjustment plate 82, a third adjustment plate 83, a fourth adjustment plate 84, and a fifth adjustment plate 85. The first adjustment plate 81 is disposed between two battery layers 2 disposed vertically adjacent to each other. The second adjustment plate 82 is disposed at a bottom of a bottom battery layer 2. The third adjustment plate 83 is disposed at a top of a top battery layer 2. The fourth adjustment plate 84 is disposed between two adjacent battery modules 3 in the same battery layer 2. The fifth adjustment plate 85 is disposed between two adjacent battery cells 4 in the same battery module 3. Therefore, by setting the temperature adjustment member 8 in at least one form, adjustment on the temperature of the battery cell 4 can be realized, so that the battery 1 can operate at a suitable temperature, thereby improving the operation reliability and the service life of the battery 1, and the operation energy efficiency of the battery 1.

In some embodiments, the at least one temperature adjustment member 8 is disposed between two battery layers 2 in adjacent layers in the height direction of the battery 1. When the battery cells 4 are not arranged in groups, a temperature adjustment member 8 is disposed between the battery cells 4 in adjacent layers in the height direction of the battery 1; and when the battery cells 4 are arranged in groups, a temperature adjustment member is disposed between the battery modules 3 in adjacent layers in the height direction of the battery 1. Therefore, full adjustment on the temperature of the battery cell 4 can be realized, so that the battery 1 can operate at a suitable temperature, improving the operation reliability and the service life of the battery 1 and the operation energy efficiency of the battery 1.

In some embodiments, when the number of layers of the battery layers 2 in the first housing portion 51 is smaller than or equal to the number of layers of the battery layers 2 in the second housing portion 52, a number of the temperature adjustment members 8 disposed in the first housing portion 51 is smaller than or equal to a number of the temperature adjustment members 8 disposed in the second housing portion 52. Therefore, the space can be rationally utilized, which not only ensures the energy density of the battery 1, but also ensures a temperature adjustment effect.

In some embodiments, at least part of a plurality of temperature adjustment members 8 are disposed parallel to the first direction X, and/or at least another part of the plurality of temperature adjustment members 8 are disposed perpendicular to the first direction X. Therefore, the arrangement of the temperature adjustment member 8 can be simplified, to make full use of the space and improve the temperature adjustment effect.

In some embodiments, the first housing portion 51 and the two second housing portions 52 share the at least one temperature adjustment member 8. As shown in FIG. 12 and FIG. 13, the temperature adjustment member 8 includes a common horizontal plate 86. A part of the common horizontal plate 86 is located in the first housing portion 51, and the rest of the common horizontal plate 86 is located in the second housing portion 52. Therefore, the design of the temperature adjustment member 8 can be simplified, and the assembly is simplified.

In addition, when a fluid circuit is provided in the temperature adjustment member 8, the temperature of the battery 1 may be adjusted by controlling a temperature of a fluid flowing in the fluid circuit. Since a part of the common horizontal plate 86 is located in the first housing portion 51, and the rest of the common horizontal plate 86 are located in the second housing portion 52, the design of the fluid circuit and a connection design for fluid inlet and outlet can be simplified.

For example, with reference to FIG. 2, the docking structure 7 may include at least one of a first sub-docking portion 71a and a second sub-docking portion 71b. The first sub-docking portion 71a docks with the vehicle 1000 to allow for current conduction. The second sub-docking portion 71b docks with the vehicle 1000 to allow for liquid conduction. When a fluid circuit is provided in the temperature adjustment member 8, the second sub-docking portion 71b may be in communication with the fluid circuit, and the second sub-docking portion 71b docks with the vehicle 1000 to be able to be in communication with a refrigerating medium system of the vehicle 1000, to adjust the temperature of the battery 1 by using the refrigerating medium system. For example, each sub-docking portion 71 corresponds to at least one docking header 74, and the sub-docking portion 71 may dock with the vehicle 1000 through the docking header 74.

In some embodiments, as shown in FIG. 3 and FIG. 4, the first housing portion 51 and the two second housing portions 52 are at least partially formed integrally. Therefore, connection reliability of the first housing portion 51 and the second housing portion 52 can be improved, and overall reliability of the battery 1 is improved. Moreover, the assembly of the first housing portion 51 and the second housing portion 52 can be simplified, and the assembly efficiency of the battery 1 is improved.

In some embodiments, as shown in FIG. 3 and FIG. 4, the housing 5 includes a housing body 53 and a housing cover 54. An area of the housing body 53 is greater than an area of the housing cover 54. The housing body 53 is an integrally-formed part and has an opening defined thereon. The housing cover 54 covers the opening, and the housing body 53 forms a part of the first housing portion 51 and a part of each of the two second housing portions 52.

Therefore, during mounting, the battery cell 4 can be loaded into the housing body 53 from the opening, and then the housing cover 54 is used to cover the opening, thereby facilitating the assembly of the battery 1. Moreover, since the housing body 53 is an integrally-formed part and has the area greater than the area of the housing cover 54, the housing body 53 forms a part of the first housing portion 51 and a part of the second housing portion 52, so that the connection reliability of the first housing portion 51 and the second housing portion 52 can be further improved, the overall reliability of the battery 1 is improved, and the assembly efficiency of the battery 1 is improved.

Optionally, one of the mounting structure 6 and the docking structure 7 is disposed on the housing body 53, and the other one of the mounting structure 6 and the docking structure 7 is disposed on the housing cover 54. For example, the mounting structure 6 is disposed on the housing body 53, and the docking structure 7 is disposed on the housing cover 54. For another example, the mounting structure 6 is disposed on the housing cover 54, and the docking structure 7 is disposed on the housing body 53. Alternatively, the mounting structure 6 and the docking structure 7 are each disposed on the housing body 53 or on the housing cover 54. For example, the mounting structure 6 and the docking structure 7 are each disposed on the housing body 53. For another example, the mounting structure 6 and the docking structure 7 are each disposed on the housing cover 54.

For example, as shown in FIG. 3 and FIG. 4, when a side wall of the second housing portion 52 is defined by the housing body 53, and the top wall of the first housing portion 51 is defined by the housing cover 54, the docking structure 7 may be disposed on the housing cover 54 and located at the bottom wall 10a of the recess 10, and the mounting structure 6 may be disposed on the housing body 53 and located at the side wall 10b of the recess 10.

Alternatively, for another example, the side wall of the second housing portion 52 and the top wall of the first housing portion 51 are each defined by the housing cover 54. The docking structure 7 may be disposed on the housing cover 54 and located at the bottom wall 10a of the recess 10. The mounting structure 6 may also be disposed on the housing cover 54 and located at the side wall 10b of the recess 10.

It should be noted that structure and shape of the housing body 53 are not limited, and may be specifically designed according to the shape of the battery 1. A number and positions of opening on the housing body 53 are each not limited, and may be designed according to actual situations. For example, the opening may be disposed at a longitudinal side, a vertical top side, a vertical bottom side, or a transverse side of the housing body 53. Shapes and a number of the housing covers 54 are not limited, and may be designed to match the openings. At least one housing cover 54 may be correspondingly disposed on one opening.

For example, in some embodiments, as shown in FIG. 3 and FIG. 4, the opening may include a first opening 531 corresponding to the first housing portion 51 and a second opening 532 corresponding to each of the two second housing portions 52. The housing cover 54 includes a first housing cover 541 covering the first opening 531 and a second housing cover 542 covering the second opening 532. The first housing cover 541 and the second housing cover 542 are formed separately or formed integrally.

Therefore, the battery cell 4 can be loaded into the first housing portion 51 through the first opening 531, and the battery cell 4 can be loaded into the second housing portion 52 through the second opening 532. When the first housing cover 541 and the second housing cover 542 are formed integrally, the assembly efficiency can be improved, sealing difficulty of the housing 5 is lowered, and a sealing effect is improved. When the first housing cover 541 and the second housing cover 542 are formed separately, i.e., the first housing cover 541 and the second housing cover 542 are not formed integrally, at this time, the positions of the first housing cover 541 and the second housing cover 542 can be flexibly designed to satisfy different opening manners.

For example, in some embodiments of the present disclosure, the first opening 531 and the second opening 532 are each disposed at the top of the housing body 53, and the first housing cover 541 and the second housing cover 542 are formed separately or formed integrally and cover the top of the housing body 53. Therefore, the design is simple. Alternatively, one of the first opening 531 and the second opening 532 is disposed at the top of the housing body 53, and the other one of the first opening 531 and the second opening 532 is disposed at a longitudinal side surface of the housing body 53, and the first housing cover 541 and the second housing cover 542 are formed separately and respectively cover the corresponding openings. Alternatively, the first opening 531 and the second opening 532 are each disposed at the bottom of the housing body 53, and the first housing cover 541 and the second housing cover 542 are formed integrally or formed separately and cover the bottom of the housing body 53. Details are omitted herein.

In some embodiments, the housing 5 of the battery 1 may be made of a high-strength material, to ensure that reliability of a connection of the mounting structure 6 disposed on the housing with the vehicle-bottom longitudinal beam 200. For example, the housing 5 of the battery 1 may be made of a high-strength steel rolled profile or the like.

The vehicle 1000 according to the embodiments of the present disclosure is described below with reference to the accompanying drawings.

As shown in FIG. 1 and FIG. 6 to FIG. 10, the vehicle 1000 may include the vehicle-bottom longitudinal beam 200 and the battery 1 according to any one of the embodiments of the present disclosure. The vehicle-bottom longitudinal beam 200 extends into the recess 10. A part of a top wall of the housing 5 other than the recess 10 is higher than a lower end surface of the vehicle-bottom longitudinal beam 200.

Therefore, the spaces at the two sides of the vehicle-bottom longitudinal beam 200 can be fully utilized, which is beneficial to the improvement of the energy density of the battery 1 and the improvement of the height of the battery 1 above the ground, to prevent the bottom of the battery 1 from being bumped, and to the battery swapping operation. In this way, the battery swapping station 2000 does not need to be trenched, and battery swapping can be realized without the need for lifting the vehicle 1000.

For example, in some embodiments, when the battery 1 is detachably mounted on the vehicle-bottom longitudinal beam 200 of the vehicle 1000 through the mounting structure 6 on the battery 1, and when the mounting structure 6 is located at the side of the battery 1 facing towards the vehicle-bottom longitudinal beam 200, the vehicle-bottom longitudinal beam 200 may have a connection structure 300 defined thereon, the mounting structure 6 is detachably connected to the connection structure 300, and at least one of the mounting structure 6 and the connection structure 300 is a locking structure. For example, the mounting structure 6 is a locking structure. For another example, the connection structure 300 is a locking structure. For another example, the mounting structure 6 and the connection structure 300 are each locking structures.

The locking structure has a locked state and an unlocked state. In the locked state, the mounting structure 6 and the connection structure 300 are in the locked state and cannot be separated from each other, and the battery 1 is in a firmly mounted state. In the unlocked state, the mounting structure 6 and the connection structure 300 are in the unlocked state and can be separated from each other, and the battery 1 can be detached from the vehicle 1000.

Therefore, by arranging the at least one of the mounting structure 6 and the connection structure 300 as the locking structure, it is beneficial to firm mounting of the battery 1 and satisfaction of disassembly and replacement requirements for the battery 1. Specifically, a specific type of the locking structure is unlimited, for example, may include a screw, a padlock, or the like.

In some embodiments, as shown in FIG. 10, an unlocking position of the locking structure is located at the longitudinal outer side of the battery 1. For example, the unlocking position is located in front of the battery 1 or behind the battery 1, like located between two adjacent batteries 1 in the longitudinal direction. Therefore, since the unlocking position of the locking structure is located at the longitudinal outer side of the battery 1, the unlocking position is not shielded by the battery 1, so that unlocking operation and locking observation on the locking structure can be conveniently performed.

Moreover, there is no need to punch holes from the bottom of the battery 1 in the vertical direction, so that an unlocking member extends into the holes in the vertical direction to touch the locking structure for unlocking. In this way, it can avoid that the space inside the battery 1 is occupied because of hole punching, and the energy density of the battery 1 can be further improved. Moreover, the problem of difficult sealing of the battery 1 because of hole punching is avoided, which is favorable to the processing and design of the battery 1.

For example, when a plurality of batteries 1 are provided, if the unlocking position of the locking structure is located at the longitudinal outer side of the battery 1, a gap between two adjacent batteries 1 may be 30 mm or more, thereby facilitating unlocking.

In some embodiments, as shown in FIG. 1 and FIG. 2, the longitudinal dimension L1 of the battery 1 is smaller than the transverse dimension L2 of the battery 1, indicating that the transverse dimension L2 of the battery 1 is large, and the longitudinal dimension L1 of the battery 1 is small. When the transverse dimension L2 of the battery 1 cannot exceed the transverse width of the vehicle 1000, the longitudinal dimension L1 of the battery 1 can be ensured not to be too large, and the dimension of the battery 1 is small. Therefore, it is beneficial to the improvement of the mounting reliability of the battery 1 and the mounting of the battery 1. For example, when there are two or three sub-mounting portions 61 at the same side wall arranged at intervals in the longitudinal direction, the stress of each sub-mounting portion 61 can be better reduced, thereby ensuring the mounting reliability of the battery 1. Moreover, since the dimension of the single battery 1 is small, the deformation of the battery 1 can be reduced, which is beneficial to the improvement of the assembly success rate of the battery 1.

In addition, when the dimension of the battery 1 is small, as shown in FIG. 1 and FIG. 7, a plurality of batteries 1 may be disposed at the bottom of the vehicle 1000 and be configured to be separately detachable relative to the vehicle 1000, so that a corresponding number of batteries 1 may be matched according to different application scenarios, different mileage, different configurations of the vehicle 1000, and the like, which enhances the battery swapping flexibility. In this way, different vehicle models and application scenarios may be compatible. Moreover, since there is no need to match a single battery pack for a vehicle model, the adaptability of the battery swapping station is improved, so that the number of battery swapping stations can be reduced, a distance between adjacent battery swapping stations is increased, and an input cost is lowered.

For example, a large heavy truck can use six batteries 1, while a tractor only needs to use three batteries 1, and a small truck only needs to use two batteries 1. Moreover, there is also a need to take into account the mileage requirement. For example, a tractor can run 300 kilometers to 500 kilometers with three batteries 1, but if the mileage requirement from 300 kilometers to 500 kilometers is not needed, then two batteries 1 or one battery 1 can be considered for use.

Moreover, there is no need to mount all batteries 1 to the vehicle 1000, reducing the load of the vehicle 1000. In addition, since each battery 1 can be separately disassembled and replaced, the battery 1 that has been deeply discharged can be disassembled and replaced, thereby avoiding the problem of power waste of the battery 1 caused by replacement of the battery 1 without deep discharge.

In addition, compared with the solution of a whole large battery pack, when a plurality of batteries 1 with small dimensions are used in combination, since all batteries 1 need not to be replaced each time, the battery swapping efficiency is high, so that a throughput of the battery swapping station 2000 in the same space can be significantly improved.

A battery swapping station 2000 according to the embodiments of the present disclosure is described below with reference to the accompanying drawings.

As shown in FIG. 20, the battery swapping station 2000 is configured to replace the battery 1 for the vehicle 1000 according to any one of the embodiments of the present disclosure.

In some embodiments, the battery swapping station 2000 includes a battery swapping region 600. The vehicle 1000 is adapted to replace the battery 1 in the battery swapping region 600. The battery swapping region 600 includes a first region 601 and a second region 602. The first region 601 is adapted to be located directly below the battery 1. The second region 602 is configured to support a front wheel 400 and a rear wheel 500 that are adjacent to the battery 1, and a ground at the first region 601 is flush with a ground at the second region 602.

Since a height of the bottom surface of the battery 1 above the ground according to some embodiments of the present disclosure can be improved, the battery swapping station 2000 can cancel the whole vehicle lifting or trench digging requirement, thereby simplifying the site layout of the battery swapping station 2000 and improving the space utilization rate.

Optionally, the whole ground of the battery swapping region 600 is a plane. Therefore, construction difficulty of the battery swapping station 2000 is lowered. It is beneficial to a reduction in a construction cost of the battery swapping station 2000.

The following describes a battery 1 and a battery swapping method for the vehicle 1000 in which the battery 1 is applied according to a specific embodiment of the present disclosure.

Referring to the figures, a plurality of batteries 1 are mounted on the vehicle-bottom longitudinal beam 200 of the vehicle 1000 and arranged along the length direction of the vehicle-bottom longitudinal beam 200. Each battery 1 can be detached separately relative to the vehicle-bottom longitudinal beam 200. A recess 10 is formed at the top of the battery 1 and accommodates the vehicle-bottom longitudinal beam 200. In this way, the battery 1 can utilize the space at two sides of the vehicle-bottom longitudinal beam 200 and the space below the vehicle-bottom longitudinal beam 200 to ensure the energy density of the battery 1 and increase the height of the battery 1 above the ground.

Two battery layers 2 are arranged in parts of the battery 1 located at the two sides of the vehicle-bottom longitudinal beam 200, respectively. Each battery layer 2 includes a plurality of battery modules 3 arranged in parallel, and each battery module 3 includes a plurality of battery cells 4 arranged in parallel, so that the spaces at the two sides of the vehicle-bottom longitudinal beam 200 are fully and effectively utilized. One battery layer 2 is arranged in a part of the battery 1 located below the vehicle-bottom longitudinal beam 200. The battery layer 2 includes a plurality of battery modules 3 arranged in parallel. Each battery module 3 includes a plurality of battery cells 4 arranged in parallel. Therefore, while the space underneath the vehicle-bottom longitudinal beam 200 is fully utilized, a sufficient space between the bottom surface of the battery 1 and the ground can be effectively ensured. In this way, on the one hand, scraping between the bottom surface of the battery 1 and the protrusion of ground can be avoided, and the battery 1 can be effectively protected. On the other hand, sufficient space can be reserved for the battery swapping, so that without the need for digging a trench at the battery swapping station 2000 and lifting the vehicle 1000, the battery swapping can be realized, the site arrangement of the battery swapping station 2000 is simplified, and the space utilization rate is improved.

Specifically, the mounting structure 6 is disposed at each of the two transverse side walls 10b of the recess 10. Each mounting structure 6 includes two to three sub-mounting portions 61 arranged at intervals in the longitudinal direction. The connection structure 300 is arranged at a position of each of two side surfaces of the vehicle-bottom longitudinal beam 200 corresponding to each mounting structure 6. One of the sub-mounting portions 61 and the connection structure 300 is a mounting pin, the other one of the sub-mounting portions 61 and the connection structure 300 is a battery swapping lock. When the battery 1 is replaced, the battery 1 is pushed upwards, and the mounting pin is sandwiched into the battery swapping lock, so that the mounting of the battery 1 to the vehicle-bottom longitudinal beam 200 can be completed. Since the plurality of batteries 1 are mounted on the vehicle-bottom longitudinal beam 200, the dimension of each battery 1 is small, which not only can improve the mounting reliability of each battery 1, but is also beneficial to the battery swapping design of each battery 1.

When the battery in the related art is mounted to the vehicle, the battery pack is pre-mounted on the battery swapping frame, and then the whole battery swapping frame is fixed to a vehicle chassis. Such a mounting mode mainly has the following problems.

First, since the battery pack is pre-mounted on the battery swapping frame, the whole battery swapping unit will be large and heavy, and the battery swapping station matched with the battery swapping unit needs to be trenched or lift the vehicle. Moreover, the battery-swapping transport vehicle designed in a matched manner needs to be made larger, more load-bearing, complex in design, and high in cost.

For the battery 1 according to the embodiments of the present disclosure, since the battery 1 can be mounted on the vehicle-bottom longitudinal beam 200 through the mounting structure 6 of the battery 1 itself, the battery swapping frame can be omitted, which lowers the battery swapping cost and improve the battery swapping efficiency. Moreover, the height of the battery 1 above the ground can be increased, eliminating the need to lift the entire vehicle or dig a trench for the passage of the matched battery-swapping transport vehicle, thereby lowering the site configuration difficulty of the battery swapping station 2000. Moreover, the design difficulty of the matched battery-swapping transport vehicle can also be lowered, and the cost is lowered.

Second, battery-swapping locking-attachment points on the battery swapping frame are each located at an outer peripheral wall of the battery swapping frame, and a span between a plurality of battery-swapping locking-attachment points is large, so that a deviation between the plurality of battery-swapping locking-attachment points is also large. Therefore, a locking-attachment time is lengthened during battery swapping, and a battery-swapping locking-attachment success rate is reduced, so that the battery swapping efficiency is limited. Moreover, a torque borne by the battery-swapping locking-attachment point is large, which has extremely high requirements for a strength of a quick-change lock, and the mounting reliability of the battery is low.

For the battery 1 according to the embodiments of the present disclosure, since the battery 1 can be mounted on the vehicle-bottom longitudinal beam 200 through the mounting structure 6 of the battery 1 itself, and since the mounting structure 6 faces towards the vehicle-bottom longitudinal beam 200, the deviation between the locking-attachment points can be reduced, so that the locking-attachment time is shortened during battery swapping, and the battery-swapping locking-attachment success rate is improved. Therefore, the battery swapping efficiency is improved. Moreover, the torque borne by the mounting structure 6 is small, and the mounting reliability of the battery 1 is high, which has low requirements for the strength of the mounting pin and the battery swapping lock.

Third, because the battery pack is formed integrally as an integral pack, a larger battery swapping frame is required to bear the stress. Therefore, a space occupied by the battery swapping frame is also larger, which causes an electric quantity of the battery pack to not be made large, thereby limiting a distance between the battery swapping stations, increasing the number of battery swapping stations, and improving the costs.

For the battery 1 according to the embodiments of the present disclosure, since the battery 1 can be mounted on the vehicle-bottom longitudinal beam 200 through the mounting structure 6 of the battery 1 itself, the battery swapping frame is omitted. Moreover, a plurality of batteries 1 are provided, so that the electric quantity may be large, which shortens the distance between the battery swapping station 2000 and the battery swapping station 2000, reduces the number of battery swapping stations 2000, and lowers the cost.

Fourth, only one battery pack can be matched for one vehicle model, and only a single battery pack can be matched for different application scenes, so that the battery swapping flexibility is low, and the compatibility is poor.

For the battery 1 according to the embodiments of the present disclosure, the plurality of batteries 1 are provided and separately and detachably mounted to the vehicle-bottom longitudinal beam 200. In this way, the compatibility can be obviously improved, and the battery swapping flexibility is obviously improved. Moreover, the adaptability and throughput of the battery swapping station 2000 can be increased, the number of battery swapping stations 2000 is reduced, the distance between the battery swapping stations 2000 is reduced, and the input cost is lowered.

It should be noted that embodiments of the present disclosure and features disclosed in the embodiments of the present disclosure can be combined with each other without conflicting.

While preferred embodiments of the present disclosure have been described above, the present disclosure is not limited thereto. For those skilled in the art, various changes and modifications can be made to the present disclosure. Any modification, equivalent replacement, improvement, etc., made within the spirit and principle of the present disclosure shall fall within the scope of the present disclosure.

## Claims

1. A battery, comprising:
a battery cell; and
a housing, the battery cell being accommodated in the housing, the housing comprising a first housing portion and two second housing portions located at two sides of the first housing portion in a first direction, the battery cell being disposed in each of the first housing portion and the two second housing portions, wherein:
a recess is defined by the first housing portion and the two second housing portions together, the recess being a through recess in the first direction and opened towards a second direction, the first direction intersecting the second direction;
the battery is adapted to be disposed at a bottom of a vehicle; and
a vehicle-bottom longitudinal beam of the vehicle is adapted to pass through the recess in the first direction and to be detachably mounted in the recess in the second direction.

2. The battery according to claim 1, wherein ends of the two second housing portions at one side each protrude from the first housing portion in the second direction, to define the recess by an end wall of the first housing portion perpendicular to the second direction and side walls of the two second housing portions facing towards the first housing portion.

3. The battery according to claim 2, wherein the end wall of the first housing portion facing towards the recess is adapted to be lower than the vehicle-bottom longitudinal beam.

4. The battery according to claim 2 or 3, wherein a docking structure is disposed in the recess and is adapted to be extended between two longitudinal beams of the vehicle-bottom longitudinal beam, the docking structure being configured to dock with the vehicle to allow for current conduction and/or liquid conduction.

5. The battery according to claim 4, wherein the docking structure is disposed at the end wall of the first housing portion facing towards the recess.

6. The battery according to claim 5, wherein the docking structure comprises:
a box body disposed at the end wall of the first housing portion facing towards the recess;
a docking body disposed in the box body; and
a docking header disposed outside the box body, the docking header being connected to the docking body, the docking body being connected to a circuit and/or a fluid circuit in the housing.

7. The battery according to claim 6, wherein:
the docking header is adapted to dock with the vehicle in the first direction; or
the docking header is adapted to dock with the vehicle in the second direction.

8. The battery according to claim 1, wherein:
the first housing portion is connected to the second housing portion through a transition portion;
each of the first housing portion and the second housing portion extends beyond the transition portion in the second direction; and
the recess is defined by a side wall of the first housing portion facing towards the second housing portion, an end wall of the transition portion perpendicular to the second direction, and a side wall of the second housing portion facing towards the first housing portion.

9. The battery according to claim 8, wherein the first housing portion has a docking structure disposed at a side wall of the first housing portion perpendicular to the first direction, the docking structure being configured to dock with the vehicle to allow for current conduction and/or liquid conduction.

10. The battery according to claim 9, wherein the docking structure is adapted to be disposed at an end of the first housing portion close to the recess in the second direction, allowing the docking structure to be at least partially extended between two longitudinal beams of the vehicle-bottom longitudinal beam.

11. The battery according to claim 8, wherein the first housing portion has a docking structure disposed at an end wall of the first housing portion perpendicular to the second direction and close to the recess, the docking structure being adapted to dock in the first direction or in the second direction, and the docking structure being configured to be connected to the vehicle to allow for current conduction and/or liquid conduction.

12. The battery according to any one of claims 1 to 11, wherein a mounting structure is disposed on the housing and is configured to detachably mount the battery to the vehicle.

13. The battery according to claim 12, wherein the mounting structure comprises a plurality of sub-mounting portions, at least part of the plurality of sub-mounting portions being located in the recess.

14. The battery according to claim 13, wherein:
at least part of the plurality of sub-mounting portions is located at a bottom wall of the recess; and/or
at least part of the plurality of sub-mounting portions is located at a side wall of the recess.

15. The battery according to any one of claims 12 to 14, wherein the mounting structure comprises a plurality of sub-mounting portions, at least part of the plurality of sub-mounting portions being located outside the recess.

16. The battery according to claim 15, wherein at least part of the plurality of sub-mounting portions is located at an end wall of each of the two second housing portions close to the recess in the second direction.

17. The battery according to claim 15, wherein:
the recess is the recess according to claim 9; and
at least part of the plurality of sub-mounting portions is located at an end wall of the first housing portion close to the recess in the second direction.

18. The battery according to claim 15, wherein at least part of the plurality of sub-mounting portions is located at a surface of each of the two second housing portions facing away from the first housing portion.

19. The battery according to any one of claims 12 to 18, wherein several ones of the plurality of sub-mounting portions are located at a surface of the housing parallel to the first direction and are arranged at intervals in the first direction.

20. The battery according to claim 15, wherein at least part of the plurality of sub-mounting portions is located at a surface of the housing perpendicular to the first direction.

21. The battery according to claim 20, wherein several ones of the plurality of sub-mounting portions are located at the surface of the housing perpendicular to the first direction and are arranged at intervals in a direction where the first housing portion and the two second housing portions are parallel to each other.

22. The battery according to any one of claims 12 to 21, wherein in the second direction, a maximum dimension of the mounting structure is smaller than at least one of a maximum dimension of the first housing portion and a maximum dimension of each of the two second housing portions.

23. The battery according to claim 22, wherein the battery cell is accommodated in a part of the housing that overlaps with a projection of the mounting structure in the second direction.

24. The battery according to claim 22, wherein the housing has a mounting groove disposed at an outer surface of the housing, the mounting groove being configured for an arrangement of the mounting structure.

25. The battery according to any one of claims 1 to 24, wherein a dimension L1 of the battery in the first direction is smaller than a dimension L2 of the battery in a third direction, the first housing portion and the two second housing portions being parallel to each other in the third direction.

26. The battery according to any one of claims 1 to 25, wherein an end wall of each of the two second housing portions adapted to face towards the vehicle-bottom longitudinal beam in the second direction is closer to an end wall of each of the two second housing portions adapted to face away from the vehicle-bottom longitudinal beam in the second direction than an end surface of the vehicle-bottom longitudinal beam adapted to face away from the battery in the second direction.

27. The battery according to claim 26, wherein a height difference H2 between a top wall of the first housing portion and a top wall of the second housing portion in the second direction is smaller than or equal to 100 mm.

28. The battery according to claim 26 or 27, wherein a top wall of the second housing portion is adapted to be higher than a height centerline of the vehicle-bottom longitudinal beam.

29. The battery according to claim 28, wherein a top surface of the battery cell accommodated in the second housing portion is adapted to be higher than a height center of the vehicle-bottom longitudinal beam.

30. The battery according to any one of claims 1 to 29, wherein a total height H4 of the battery cells accommodated in the second housing portion is greater than a total height H3 of the battery cells accommodated in the first housing portion.

31. The battery according to any one of claims 1 to 30, wherein a plurality of battery cells is disposed in the housing, the plurality of battery cells comprising electrode terminals having one orientation.

32. The battery according to any one of claims 1 to 30, wherein a plurality of battery cells is disposed in the housing, the plurality of battery cells comprising electrode terminals, and electrode terminals of at least two battery cells of the plurality of battery cells having different orientations.

33. The battery according to claim 32, wherein orientations of electrode terminals of the battery cells in the first housing portion are different from orientations of electrode terminals of the battery cells in the two second housing portions.

34. The battery according to any one of claims 1 to 33, wherein at least one layer of battery cells along a height direction of the battery are arranged in each of the first housing portion and the two second housing portions.

35. The battery according to claim 34, wherein a number of layers of battery cells arranged in the first housing portion is smaller than or equal to a number of layers of battery cells arranged in each of the two second housing portions.

36. The battery according to claim 35, wherein a dimension of battery cells in a single layer in the first housing portion along the height direction of the battery is the same as a dimension of battery cells in a single layer in each of the two second housing portions along the height direction of the battery.

37. The battery according to claim 34, wherein a dimension of battery cells in a single layer in the first housing portion along the height direction of the battery is smaller than a dimension of battery cells in a single layer in each of the two second housing portions along the height direction of the battery.

38. The battery according to any one of claims 1 to 33, wherein at least one layer of battery modules along a height direction of the battery are arranged in each of the first housing portion and the two second housing portions, each of the battery modules comprising a plurality of battery cells arranged in a direction perpendicular to the height direction of the battery.

39. The battery according to claim 38, wherein a number of layers of battery modules arranged in the first housing portion is smaller than or equal to a number of layers of battery modules arranged in each of the two second housing portions.

40. The battery according to claim 39, wherein a dimension of battery modules in a single layer in the first housing portion along the height direction of the battery is the same as a dimension of battery modules in a single layer in each of the two second housing portions along the height direction of the battery.

41. The battery according to claim 38, wherein a dimension of battery modules in a single layer in the first housing portion along the height direction of the battery is smaller than a dimension of battery modules in a single layer in each of the two second housing portions along the height direction of the battery.

42. The battery according to any one of claims 38 to 41, wherein:
a plurality of battery modules is arranged in the housing, several ones of the plurality of battery modules being arranged in parallel in the first direction; and/or
a plurality of battery modules is arranged in the housing, several ones of the plurality of battery modules being arranged in parallel in a third direction, the first housing portion and the two second housing portions are arranged in the third direction.

43. The battery according to any one of claims 1 to 42, further comprising at least one temperature adjustment member, the at least one temperature adjustment member being disposed in each of the first housing portion and the two second housing portions.

44. The battery according to claim 43, wherein the at least one temperature adjustment member comprises a plurality of temperature adjustment members, the plurality of temperature adjustment members being disposed in the first housing portion and the two second housing portions, respectively.

45. The battery according to claim 43, wherein:
the battery is the battery according to claim 34, the at least one temperature adjustment member being disposed between battery cells in adjacent layers in the height direction of the battery; or
the battery is the battery according to claim 38, the at least one temperature adjustment member being disposed between battery modules in adjacent layers in the height direction of the battery.

46. The battery according to claim 43, wherein the battery is the battery according to claim 35 or 39, a number of temperature adjustment members disposed in the first housing portion being smaller than or equal to a number of temperature adjustment members disposed in each of the two second housing portions.

47. The battery according to claim 43, wherein:
at least part of a plurality of temperature adjustment members are disposed parallel to the first direction; and/or
at least another part of the plurality of temperature adjustment members are disposed perpendicular to the first direction.

48. The battery according to claim 43, wherein the first housing portion and the two second housing portions share the at least one temperature adjustment member.

49. The battery according to any one of claims 1 to 48, wherein the first housing portion and the two second housing portions are at least partially formed integrally.

50. The battery according to claim 49, wherein the housing comprises a housing body and a housing cover, an area of the housing body being greater than an area of the housing cover, the housing body being an integrally-formed part and having an opening defined thereon, the housing cover covering the opening, and the housing body forming a part of the first housing portion and a part of each of the two second housing portions.

51. The battery according to claim 50, wherein:
the opening comprises a first opening corresponding to the first housing portion and a second opening corresponding to each of the two second housing portions; and
the housing cover comprises a first housing cover covering the first opening and a second housing cover covering the second opening, the first housing cover and the second housing cover being formed separately or formed integrally.

52. A vehicle, comprising:
a vehicle-bottom longitudinal beam; and
the battery according to any one of claims 1 to 51, the vehicle-bottom longitudinal beam extending into the recess, a part of a top wall of the housing other than the recess being higher than a lower end surface of the vehicle-bottom longitudinal beam.
